# EUROPEAN PATENT APPLICATION

(11) **EP 4 629 736 A1**
(43) Date of publication of application: **08.10.2025**
(21) Application number: 24741684.5
(22) Date of filing: 10.01.2024
(51) Int. Cl.: H04W 74/08, H04W 72/25, H04W 24/08, H04W 88/04, H04W 92/18

(54) **METHOD AND DEVICE FOR MULTI-HOP SIDELINK COMMUNICATION IN SHARED COT**

(30) Priority: 13.01.2023 KR 20230005699
(71) Applicant: Hyundai Motor Company, Seoul 06797 (KR); Kia Corporation, Seoul 06797 (KR); Gachon University Industry-Academic Cooperation Foundation, Seongnam-si, Gyeonggi-do 13120 (KR)
(72) Inventor: HONG, Ui Hyun, Hwaseong-si, Gyeonggi-do 18280 (KR); SON, Hyuk Min, Seoul 05649 (KR)
(74) Representative: Isarpatent
(86) International application number: PCT/KR2024/000442
(87) International publication number: WO 2024/151063

(57) **Abstract**

Provided are a method and device of multi-hop sidelink communication in a shared COT. A method of a first user equipment (UE) may comprise receiving channel occupancy time (COT) sharing information from a second UE, receiving first sidelink (SL) transmission from a third UE within a shared COT according to the COT sharing information, determining whether second SL transmission is performed within the shared COT based on one or more conditions, and performing the second SL transmission in the shared COT upon determining that the second SL transmission is performed.

## Description

### Technical Field

The present disclosure relates to a sidelink communication technology in an unlicensed band, and more particularly, to a multi-hop sidelink communication technology in a shared channel occupancy time (COT).

### Background Art

A communication network (e.g., 5G communication network or 6G communication network) is being developed to provide enhanced communication services compared to the existing communication networks (e.g., long term evolution (LTE), LTE-Advanced (LTE-A), etc.). The 5G communication network (e.g., New Radio (NR) communication network) can support frequency bands both below 6 GHz and above 6 GHz. In other words, the 5G communication network can support both a frequency region 1 (FR1) and/or FR2 bands. Compared to the LTE communication network, the 5G communication network can support various communication services and scenarios. For example, usage scenarios of the 5G communication network may include enhanced Mobile BroadBand (eMBB), Ultra Reliable Low Latency Communication (URLLC), massive Machine Type Communication (mMTC), and the like.

The 6G communication network can support a variety of communication services and scenarios compared to the 5G communication network. The 6G communication network can meet the requirements of hyper-performance, hyper-bandwidth, hyper-space, hyper-precision, hyper-intelligence, and/or hyper-reliability. The 6G communication network can support diverse and wide frequency bands and can be applied to various usage scenarios such as terrestrial communication, non-terrestrial communication, sidelink communication, and the like.

Meanwhile, in order to improve sidelink communication, carrier aggregation (CA) operation, unlicensed band operation, FR2 band operation, and/or operation for coexistence between LTE and NR may be considered. In particular, when sidelink communication is performed in an unlicensed band, methods for supporting the sidelink communication may be required. For operation in an unlicensed band, a method of initiating a channel occupancy time (COT), a method of sharing a COT, and/or a method of sidelink communication in a shared COT may be required.

### Disclosure

### Technical Problem

An object of the present invention to solve the above problems is to provide a method and device for multi-hop sidelink communication based on cast type in a shared COT (channel occupancy time).

### Technical Solution

A method of a first user equipment (UE) according to embodiments of the present disclosure for achieving the above object comprises receiving channel occupancy time (COT) sharing information from a second UE, receiving first sidelink (SL) transmission from a third UE within a shared COT according to the COT sharing information, determining whether second SL transmission is performed within the shared COT based on one or more conditions, and performing the second SL transmission in the shared COT upon determining that the second SL transmission is performed.

SL communication between the second UE and the third UE based on the second UE may be 1-hop SL communication, and SL communication between the first UE and the third UE based on the second UE may be 2-hop SL communication.

When a reception target of the second SL transmission is the second UE, the second SL transmission may be performed in the shared COT.

When a reception target of the second SL transmission is the third UE, the second SL transmission may be performed in the shared COT.

When a reception target of the second SL transmission is a fourth UE and the second SL transmission is transmission of a specific SL channel, the second SL transmission may be performed in the shared COT.

The COT sharing information may include at least one of a source ID (identifier), a destination ID, a CAPC (channel access priority class), a remaining COT duration, frequency domain information of a resource block (RB) set(s) of a COT, an additional ID, or an associated cast type.

The performing the second SL transmission may comprise performing a Type 2 SL channel access procedure in the shared COT and performing the second SL transmission when the Type 2 SL channel access procedure is successful.

The second SL transmission may be performed in an accessible period configured after the first SL transmission and the accessible period belongs to the shared COT.

The second UE may be a COT initiating UE that initiates a COT, and the shared COT may belong to the COT initiated by the second UE.

A first user equipment (UE) according to embodiments of the present disclosure for achieving the above object comprises at least one processor. The at least one processor causes the first UE to receive channel occupancy time (COT) sharing information from a second UE, receive first sidelink (SL) transmission for a third UE within a shared COT according to the COT sharing information, determine whether second SL transmission is performed within the shared COT based on one or more conditions and perform the second SL transmission in the shared COT upon determining that the second SL transmission is performed.

SL communication between the second UE and the third UE based on the second UE may be 1-hop SL communication, and SL communication between the first UE and the third UE based on the second UE may be 2-hop SL communication.

When a reception target of the second SL transmission is the second UE, the second SL transmission may be performed in the shared COT.

When a reception target of the second SL transmission is the third UE, the second SL transmission may be performed in the shared COT.

When a reception target of the second SL transmission is a fourth UE and the second SL transmission is transmission of a specific SL channel, the second SL transmission may be performed in the shared COT.

The COT sharing information may include at least one of a source ID (identifier), a destination ID, a CAPC (channel access priority class), a remaining COT duration, frequency domain information of a resource block (RB) set(s) of a COT, an additional ID, or an associated cast type.

When performing the second SL transmission, the at least one processor may cause the first UE to perform a Type 2 SL channel access procedure in the shared COT and perform the second SL transmission when the Type 2 SL channel access procedure is successful.

The second SL transmission may be performed in an accessible period configured after the first SL transmission and the accessible period belongs to the shared COT.

The second UE may be a COT initiating UE that initiates a COT, and the shared COT may belong to the COT initiated by the second UE.

### Advantageous Effects

According to the present disclosure, a COT (channel occupancy time) initiating UE (user equipment) may transmit COT sharing information. A 1-hop UE may perform SL (sidelink) transmission within a shared COT according to the COT sharing information. A 2-hop UE may perform SL transmission within a shared COT according to the COT sharing information when predefined condition(s) are satisfied. Therefore, SL transmission within a shared COT can be performed efficiently, and the performance of a communication system can be improved.

### Description of Drawings

FIG. **1** is a conceptual diagram illustrating scenarios of Vehicle-to-Everything (V2X) communications.
FIG. **2** is a conceptual diagram illustrating an exemplary embodiment of a communication system.
FIG. **3** is a conceptual diagram illustrating an exemplary embodiment of a communication node constituting a communication system.
FIG. **4** is a block diagram illustrating an exemplary embodiment of communication nodes performing communication.
FIG. **5A** is a block diagram illustrating an exemplary embodiment of a transmission path.
FIG. **5B** is a block diagram illustrating an exemplary embodiment of a reception path.
FIG. **6** is a block diagram illustrating an exemplary embodiment of a user plane protocol stack of a UE performing sidelink communication.
FIG. **7** is a block diagram illustrating a first exemplary embodiment of a control plane protocol stack of a UE performing sidelink communication.
FIG. **8** is a block diagram illustrating a second exemplary embodiment of a control plane protocol stack of a UE performing sidelink communication.
FIG. 9 is a timing diagram illustrating embodiments of communication methods in an unlicensed band.
FIG. 10 is a flowchart illustrating a first embodiment of an SL-U communication method.
FIG. 11 is a flowchart illustrating a second embodiment of an SL-U communication method.
FIG. 12 is a flowchart illustrating a third embodiment of an SL-U communication method.
FIG. 13 is a flowchart illustrating a fourth embodiment of an SL-U communication method.
FIG. 14 is a flowchart illustrating a fifth embodiment of an SL-U communication method.

### Mode for Invention

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

In the present disclosure, '(re)transmission' may refer to 'transmission', 'retransmission', or 'transmission and retransmission', '(re)configuration' may refer to 'configuration', 'reconfiguration', or 'configuration and reconfiguration', '(re)connection' may refer to 'connection', 'reconnection', or 'connection and reconnection', and '(re)access' may refer to 'access', 're-access', or 'access and re-access'.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, exemplary embodiments of the present disclosure will be described in detail with reference to the accompanying drawings. In describing the disclosure, to facilitate the entire understanding of the disclosure, like numbers refer to like elements throughout the description of the figures and the repetitive description thereof will be omitted. The operations according to the exemplary embodiments described explicitly in the present disclosure, as well as combinations of the exemplary embodiments, extensions of the exemplary embodiments, and/or variations of the exemplary embodiments, may be performed. Some operations may be omitted, and a sequence of operations may be altered.

Even when a method (e.g., transmission or reception of a signal) to be performed at a first communication node among communication nodes is described in exemplary embodiments, a corresponding second communication node may perform a method (e.g., reception or transmission of the signal) corresponding to the method performed at the first communication node. In other words, when an operation of a user equipment (UE) is described, a base station corresponding thereto may perform an operation corresponding to the operation of the UE. Conversely, when an operation of a base station is described, a corresponding UE may perform an operation corresponding to the operation of the base station.

The base station may be referred to by various terms such as NodeB, evolved NodeB, next generation node B (gNodeB), gNB, device, apparatus, node, communication node, base transceiver station (BTS), radio remote head (RRH), transmission reception point (TRP), radio unit (RU), road side unit (RSU), radio transceiver, access point, access node, and the like. The user equipment (UE) may be referred to by various terms such as terminal, device, apparatus, node, communication node, end node, access terminal, mobile terminal, station, subscriber station, mobile station, portable subscriber station, on-board unit (OBU), and the like.

In the present disclosure, signaling may be one or a combination of two or more of higher layer signaling, MAC signaling, and physical (PHY) signaling. A message used for higher layer signaling may be referred to as a 'higher layer message' or 'higher layer signaling message'. A message used for MAC signaling may be referred to as a 'MAC message' or 'MAC signaling message'. A message used for PHY signaling may be referred to as a 'PHY message' or 'PHY signaling message'. The higher layer signaling may refer to an operation of transmitting and receiving system information (e.g., master information block (MIB), system information block (SIB)) and/or an RRC message. The MAC signaling may refer to an operation of transmitting and receiving a MAC control element (CE). The PHY signaling may refer to an operation of transmitting and receiving control information (e.g., downlink control information (DCI), uplink control information (UCI), or sidelink control information (SCI)). The signaling may refer to a signaling between base stations and terminals and/or a signaling between terminals.

In the present disclosure, 'configuration of an operation (e.g., transmission operation)' may refer to signaling of configuration information (e.g., information elements, parameters) required for the operation and/or information indicating to perform the operation. 'configuration of information elements (e.g., parameters)' may refer to signaling of the information elements. In the present disclosure, 'signal and/or channel' may refer to signal, channel, or both signal and channel, and 'signal' may be used to mean 'signal and/or channel' .

A communication network to which exemplary embodiments are applied is not limited to that described below, and the exemplary embodiments may be applied to various communication networks (e.g., 4G communication networks, 5G communication networks, and/or 6G communication networks). Here, 'communication network' may be used interchangeably with a term 'communication system'.

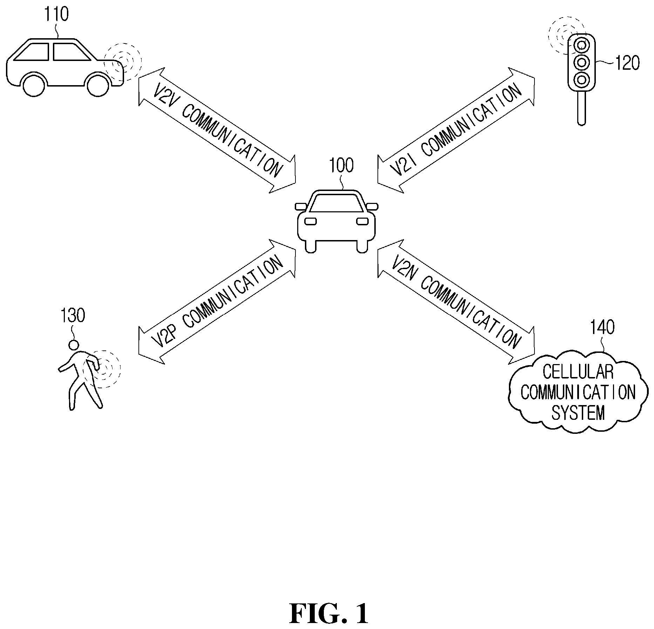

FIG. 1 is a conceptual diagram illustrating scenarios of Vehicle-to-Everything (V2X) communications.

As shown in FIG. 1, V2X communications may include Vehicle-to-Vehicle (V2V) communications, Vehicle-to-Infrastructure (V2I) communications, Vehicle-to-Pedestrian (V2P) communications, Vehicle-to-Network (V2N) communications, and the like. The V2X communications may be supported by a communication system (e.g., communication network) **140,** and the V2X communications supported by the communication system **140** may be referred to as 'Cellular-V2X (C-V2X) communications'. Here, the communication system **140** may include the 4G communication system (e.g., LTE communication system or LTE-A communication system), 5G communication system (e.g., NR communication system), and the like.

The V2V communications may include communications between a first vehicle **100** (e.g., a communication node located in the vehicle **100)** and a second vehicle **110** (e.g., a communication node located in the vehicle 110). Various driving information such as velocity, heading, time, position, and the like may be exchanged between the vehicles **100** and **110** through the V2V communications. For example, autonomous driving (e.g., platooning) may be supported based on the driving information exchanged through the V2V communications. The V2V communications supported by the communication system **140** may be performed based on sidelink communication technologies (e.g., Proximity Based Services (ProSe) and Device-to-Device (D2D) communication technologies, and the like). In the instant case, the communications between the vehicles **100** and **110** may be performed using at least one sidelink channel.

The V2I communications may include communications between the first vehicle **100** and an infrastructure (e.g., road side unit (RSU)) **120** located on a roadside. The infrastructure **120** may include a traffic light or a street light which is located on the roadside. For example, when the V2I communications are performed, the communications may be performed between the communication node located in the first vehicle **100** and a communication node located in a traffic light. Traffic information, driving information, and the like may be exchanged between the first vehicle **100** and the infrastructure **120** through the V2I communications. The V2I communications supported by the communication system **140** may be performed based on sidelink communication technologies (e.g., ProSe and D2D communication technologies, and the like). In the instant case, the communications between the vehicle **100** and the infrastructure **120** may be performed using at least one sidelink channel.

The V2P communications may include communications between the first vehicle **100** (e.g., the communication node located in the vehicle **100)** and a person **130** (e.g., a communication node carried by the person **130**). The driving information of the first vehicle **100** and movement information of the person **130** such as velocity, heading, time, position, and the like may be exchanged between the vehicle **100** and the person **130** through the V2P communications. The communication node located in the vehicle **100** or the communication node carried by the person **130** may generate an alarm indicating a danger by judging a dangerous situation based on the obtained driving information and movement information. The V2P communications supported by the communication system **140** may be performed based on sidelink communication technologies (e.g., ProSe and D2D communication technologies, and the like). In the instant case, the communications between the communication node located in the vehicle **100** and the communication node carried by the person **130** may be performed using at least one sidelink channel.

The V2N communications may be communications between the first vehicle **100** (e.g., the communication node located in the vehicle **100**) and the communication system (e.g., communication network) **140.** The V2N communications may be performed based on the 4G communication technology (e.g., LTE or LTE-A specified as the 3GPP standards) or the 5G communication technology (e.g., NR specified as the 3GPP standards). Also, the V2N communications may be performed based on a Wireless Access in Vehicular Environments (WAVE) communication technology or a Wireless Local Area Network (WLAN) communication technology which is defined in Institute of Electrical and Electronics Engineers (IEEE) 802.11, a Wireless Personal Area Network (WPAN) communication technology defined in IEEE 802.15, or the like.

Meanwhile, the communication system **140** supporting the V2X communications may be configured as follows.

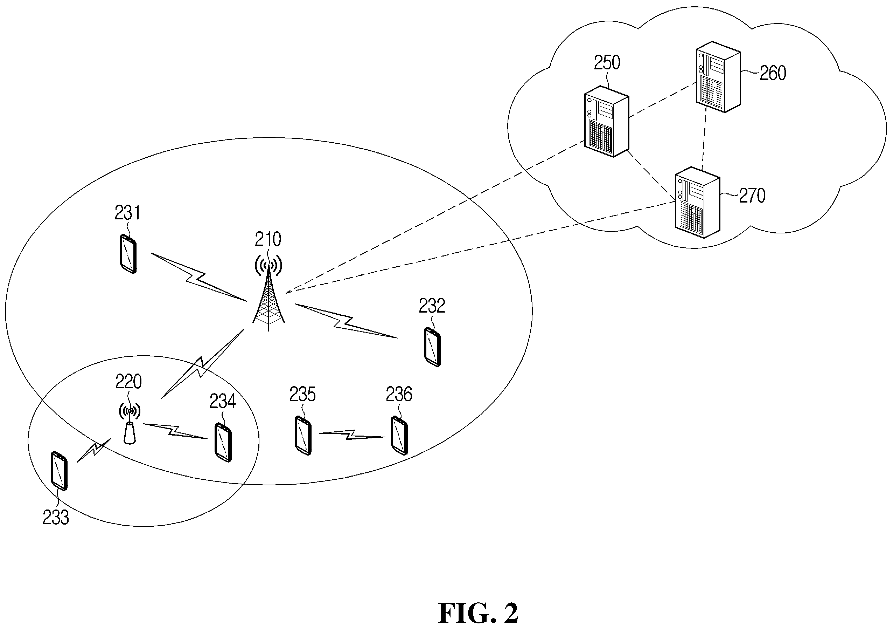

FIG. **2** is a conceptual diagram illustrating an exemplary embodiment of a communication system.

As shown in FIG. **2****,** a communication system may include an access network, a core network, and the like. The access network may include a base station **210,** a relay **220,** user equipment (UEs) **231** through **236,** and the like. The UEs **231** through **236** may include communication nodes located in the vehicles **100** and **110** of FIG. **1****,** the communication node located in the infrastructure **120** of FIG. **1****,** the communication node carried by the person **130** of FIG. **1****,** and the like. When the communication system supports the 4G communication technology, the core network may include a serving gateway (S-GW) **250,** a packet data network (PDN) gateway (P-GW) **260,** a mobility management entity (MME) **270,** and the like.

When the communication system supports the 5G communication technology, the core network may include a user plane function (UPF) **250,** a session management function (SMF) **260,** an access and mobility management function (AMF) **270,** and the like. Alternatively, when the communication system operates in a Non-Stand Alone (NSA) mode, the core network constituted by the S-GW **250,** the P-GW **260,** and the MME **270** may support the 5G communication technology as well as the 4G communication technology, and the core network constituted by the UPF **250,** the SMF **260,** and the AMF **270** may support the 4G communication technology as well as the 5G communication technology.

In addition, when the communication system supports a network slicing technique, the core network may be divided into a plurality of logical network slices. For example, a network slice supporting V2X communications (e.g., a V2V network slice, a V2I network slice, a V2P network slice, a V2N network slice, etc.) may be configured, and the V2X communications may be supported through the V2X network slices configured in the core network.

The communication nodes (e.g., base station, relay, UE, S-GW, P-GW, MME, UPF, SMF, AMF, etc.) constituting the communication system may perform communications by using at least one communication technology among a code division multiple access (CDMA) technology, a time division multiple access (TDMA) technology, a frequency division multiple access (FDMA) technology, an orthogonal frequency division multiplexing (OFDM) technology, a filtered OFDM technology, an orthogonal frequency division multiple access (OFDMA) technology, a single carrier FDMA (SC-FDMA) technology, a non-orthogonal multiple access (NOMA) technology, a generalized frequency division multiplexing (GFDM) technology, a filter bank multi-carrier (FBMC) technology, a universal filtered multi-carrier (UFMC) technology, and a space division multiple access (SDMA) technology.

The communication nodes (e.g., base station, relay, UE, S-GW, P-GW, MME, UPF, SMF, AMF, etc.) constituting the communication system may be configured as follows.

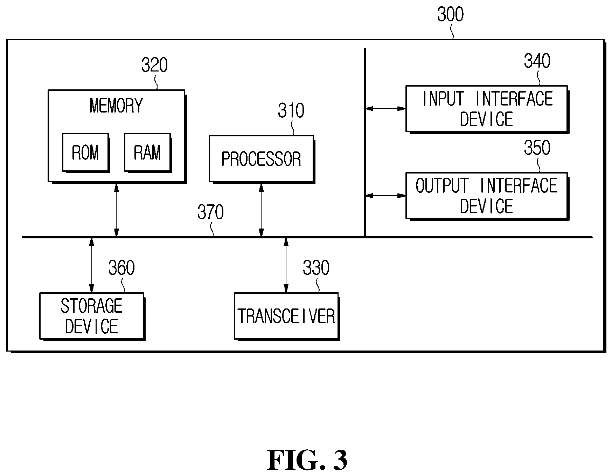

FIG. **3** is a conceptual diagram illustrating an exemplary embodiment of a communication node constituting a communication system.

As shown **in** **FIG. 3****,** a communication node **300** may comprise at least one processor **310,** a memory **320,** and a transceiver **330** connected to a network for performing communications. Also, the communication node **300** may further comprise an input interface device **340,** an output interface device **350,** a storage device **360,** and the like. Each component included in the communication node **300** may communicate with each other as connected through a bus **370.**

However, each of the components included in the communication node **300** may be connected to the processor **310** via a separate interface or a separate bus rather than the common bus **370.** For example, the processor **310** may be connected to at least one of the memory **320,** the transceiver **330,** the input interface device **340,** the output interface device **350,** and the storage device **360** via a dedicated interface.

The processor **310** may execute at least one program command stored in at least one of the memory **320** and the storage device **360.** The processor **310** may refer to a central processing unit (CPU), a graphics processing unit (GPU), or a dedicated processor on which methods in accordance with exemplary embodiments of the present disclosure are performed. Each of the memory **320** and the storage device **360** may include at least one of a volatile storage medium and a non-volatile storage medium. For example, the memory **320** may comprise at least one of read-only memory (ROM) and random access memory (RAM).

Referring again to FIG. **2**, in the communication system, the base station **210** may form a macro cell or a small cell, and may be connected to the core network via an ideal backhaul or a non-ideal backhaul. The base station **210** may transmit signals received from the core network to the UEs **231** through **236** and the relay **220,** and may transmit signals received from the UEs **231** through **236** and the relay **220** to the core network. The UEs **231, 232, 234, 235** and **236** may belong to a cell coverage of the base station **210.** The UEs **231, 232, 234, 235** and **236** may be connected to the base station **210** by performing a connection establishment procedure with the base station **210.** The UEs **231, 232, 234, 235** and **236** may communicate with the base station **210** after being connected to the base station **210.**

The relay **220** may be connected to the base station **210** and may relay communications between the base station **210** and the UEs **233** and **234.** That is, the relay **220** may transmit signals received from the base station **210** to the UEs **233** and **234,** and may transmit signals received from the UEs **233** and **234** to the base station **210.** The UE **234** may belong to both of the cell coverage of the base station **210** and the cell coverage of the relay **220,** and the UE **233** may belong to the cell coverage of the relay **220.** In other words, the UE **233** may be located outside the cell coverage of the base station **210.** The UEs **233** and **234** may be connected to the relay **220** by performing a connection establishment procedure with the relay **220.** The UEs **233** and **234** may communicate with the relay **220** after being connected to the relay **220.**

The base station **210** and the relay **220** may support multiple-input multiple-output (MIMO) technologies (e.g., single user (SU)-MIMO, multi-user (MU)-MIMO, massive MIMO, etc.), coordinated multipoint (COMP) communication technologies, carrier aggregation (CA) communication technologies, unlicensed band communication technologies (e.g., Licensed Assisted Access (LAA), enhanced LAA (eLAA), etc.), sidelink communication technologies (e.g., ProSe communication technology, D2D communication technology), or the like. The UEs **231, 232, 235** and **236** may perform operations corresponding to the base station **210** and operations supported by the base station **210.** The UEs **233** and **234** may perform operations corresponding to the relays **220** and operations supported by the relays **220.**

Here, the base station **210** may be referred to as a Node B (NB), evolved Node B (eNB), base transceiver station (BTS), radio remote head (RRH), transmission reception point (TRP), radio unit (RU), roadside unit (RSU), radio transceiver, access point, access node, or the like. The relay **220** may be referred to as a small base station, relay node, or the like. Each of the UEs **231** through **236** may be referred to as a terminal, access terminal, mobile terminal, station, subscriber station, mobile station, portable subscriber station, node, device, on-broad unit (OBU), or the like.

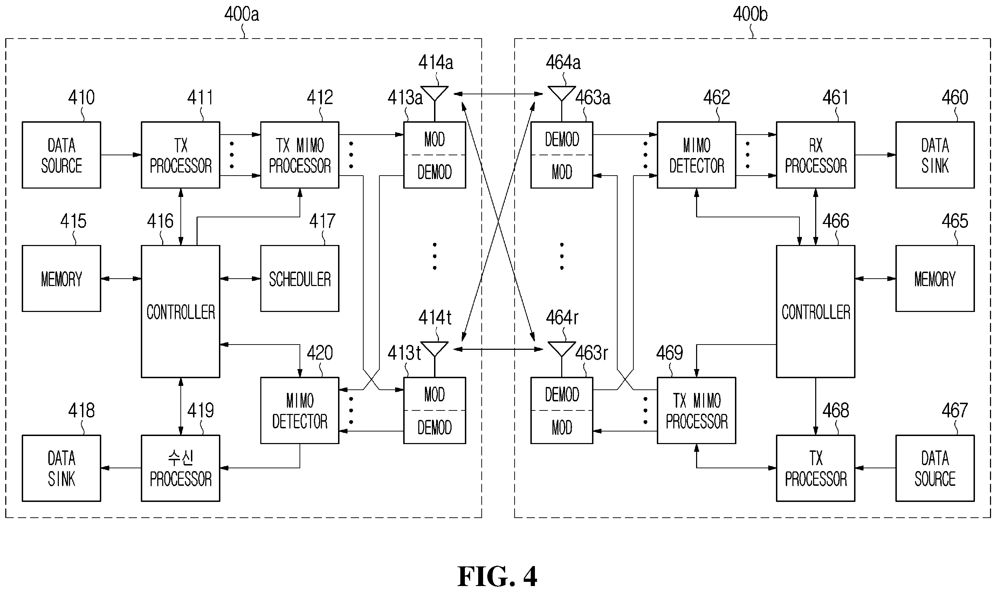

Meanwhile, communication nodes that perform communications in the communication network may be configured as follows. A communication node shown in FIG. **4** may be a specific exemplary embodiment of the communication node shown in FIG. **3****.**

FIG. **4** is a block diagram illustrating an exemplary embodiment of communication nodes performing communication.

As shown in FIG. **4****,** each of a first communication node **400***a* and a second communication node **400***b* may be a base station or UE. The first communication node **400***a* may transmit a signal to the second communication node **400***b***.** A transmission processor **411** included in the first communication node **400***a* may receive data (e.g., data unit) from a data source **410.** The transmission processor **411** may receive control information from a controller **416.** The control information may include at least one of system information, RRC configuration information (e.g., information configured by RRC signaling), MAC control information (e.g., MAC CE), or PHY control information (e.g., DCI, SCI).

The transmission processor **411** may generate data symbol(s) by performing processing operations (e.g., encoding operation, symbol mapping operation, etc.) on the data. The transmission processor **411** may generate control symbol(s) by performing processing operations (e.g., encoding operation, symbol mapping operation, etc.) on the control information. In addition, the transmission processor **411** may generate synchronization/reference symbol(s) for synchronization signals and/or reference signals.

A Tx MIMO processor **412** may perform spatial processing operations (e.g., precoding operations) on the data symbol(s), control symbol(s), and/or synchronization/reference symbol(s). An output (e.g., symbol stream) of the Tx MIMO processor **412** may be provided to modulators (MODs) included in transceivers **413***a* to **413***t***.** The modulator may generate modulation symbols by performing processing operations on the symbol stream, and may generate signals by performing additional processing operations (e.g., analog conversion operations, amplification operation, filtering operation, up-conversion operation, etc.) on the modulation symbols. The signals generated by the modulators of the transceivers **413***a* to **413***t* may be transmitted through antennas **414***a* to **414t.**

The signals transmitted by the first communication node **400***a* may be received at antennas **464***a* to **464***r* of the second communication node **400***b***.** The signals received at the antennas **464***a* to **464***r* may be provided to demodulators (DEMODs) included in transceivers **463***a* to **463***r***.** The demodulator (DEMOD) may obtain samples by performing processing operations (e.g., filtering operation, amplification operation, down-conversion operation, digital conversion operation, etc.) on the signals. The demodulator may perform additional processing operations on the samples to obtain symbols. A MIMO detector **462** may perform MIMO detection operations on the symbols. A reception processor **461** may perform processing operations (e.g., de-interleaving operation, decoding operation, etc.) on the symbols. An output of the reception processor **461** may be provided to a data sink **460** and a controller **466.** For example, the data may be provided to the data sink **460** and the control information may be provided to the controller **466.**

On the other hand, the second communication node **400***b* may transmit signals to the first communication node **400***a*. A transmission processor **469** included in the second communication node **400***b* may receive data (e.g., data unit) from a data source **467** and perform processing operations on the data to generate data symbol(s). The transmission processor **468** may receive control information from the controller **466** and perform processing operations on the control information to generate control symbol(s). In addition, the transmission processor **468** may generate reference symbol(s) by performing processing operations on reference signals.

A Tx MIMO processor **469** may perform spatial processing operations (e.g., precoding operations) on the data symbol(s), control symbol(s), and/or reference symbol(s). An output (e.g., symbol stream) of the Tx MIMO processor **469** may be provided to modulators (MODs) included in the transceivers **463***a* to **463***t*. The modulator may generate modulation symbols by performing processing operations on the symbol stream, and may generate signals by performing additional processing operations (e.g., analog conversion operation, amplification operation, filtering operation, up-conversion operations) on the modulation symbols. The signals generated by the modulators of the transceivers **463***a* to **463***t* may be transmitted through the antennas **464***a* to **464***t***.**

The signals transmitted by the second communication node **400***b* may be received at the antennas **414***a* to **414***r* of the first communication node **400***a*. The signals received at the antennas **414***a* to **414***r* may be provided to demodulators (DEMODs) included in the transceivers **413***a* to **413***r*. The demodulator may obtain samples by performing processing operations (e.g., filtering operation, amplification operation, down-conversion operation, digital conversion operation) on the signals. The demodulator may perform additional processing operations on the samples to obtain symbols. A MIMO detector **420** may perform a MIMO detection operation on the symbols. The reception processor **419** may perform processing operations (e.g., de-interleaving operation, decoding operation, etc.) on the symbols. An output of the reception processor **419** may be provided to a data sink **418** and the controller **416.** For example, the data may be provided to the data sink **418** and the control information may be provided to the controller **416.**

Memories **415** and **465** may store the data, control information, and/or program codes. A scheduler **417** may perform scheduling operations for communication. The processors **411, 412, 419, 461, 468,** and **469** and the controllers **416** and **466** shown in FIG. **4** may be the processor **310** shown in FIG. **3****,** and may be used to perform methods described in the present disclosure.

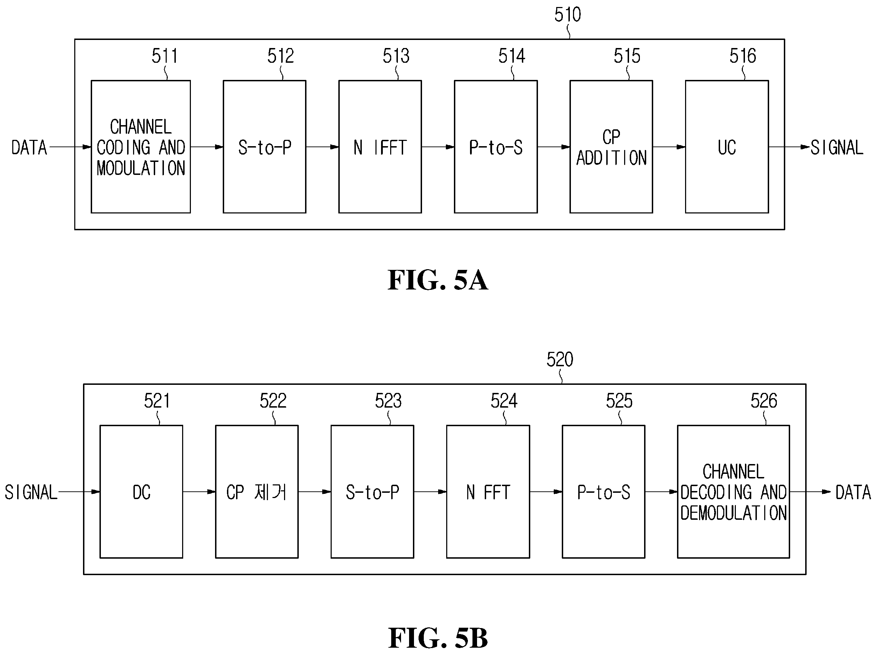

FIG. 5A is a block diagram illustrating an exemplary embodiment of a transmission path, and FIG. 5B is a block diagram illustrating an exemplary embodiment of a reception path.

As shown in FIG. 5A and 5B, a transmission path **510** may be implemented in a communication node that transmits signals, and a reception path **520** may be implemented in a communication node that receives signals. The transmission path **510** may include a channel coding and modulation block **511,** a serial-to-parallel (S-to-P) block **512,** an N-point inverse fast Fourier transform (N-point IFFT) block **513,** a parallel-to-serial (P-to-S) block **514,** a cyclic prefix (CP) addition block **515,** and up-converter (UC) **516.** The reception path **520** may include a down-converter (DC) **521,** a CP removal block **522,** an S-to-P block **523,** an N-point FFT block **524,** a P-to-S block **525,** and a channel decoding and demodulation block **526.** Here, N may be a natural number.

In the transmission path **510,** information bits may be input to the channel coding and modulation block **511.** The channel coding and modulation block **511** may perform a coding operation (e.g., low-density parity check (LDPC) coding operation, polar coding operation, etc.) and a modulation operation (e.g., Quadrature Phase Shift Keying (OPSK), Quadrature Amplitude Modulation (QAM), etc.) on the information bits. An output of the channel coding and modulation block **511** may be a sequence of modulation symbols.

The S-to-P block **512** may convert frequency domain modulation symbols into parallel symbol streams to generate N parallel symbol streams. N may be the IFFT size or the FFT size. The N-point IFFT block **513** may generate time domain signals by performing an IFFT operation on the N parallel symbol streams. The P-to-S block **514** may convert the output (e.g., parallel signals) of the N-point IFFT block **513** to serial signals to generate the serial signals.

The CP addition block **515** may insert a CP into the signals. The UC **516** may up-convert a frequency of the output of the CP addition block **515** to a radio frequency (RF) frequency. Further, the output of the CP addition block **515** may be filtered in baseband before the up-conversion.

The signal transmitted from the transmission path **510** may be input to the reception path **520.** Operations in the reception path **520** may be reverse operations for the operations in the transmission path **510.** The DC **521** may down-convert a frequency of the received signals to a baseband frequency. The CP removal block **522** may remove a CP from the signals. The output of the CP removal block **522** may be serial signals. The S-to-P block **523** may convert the serial signals into parallel signals. The N-point FFT block **524** may generate N parallel signals by performing an FFT algorithm. The P-to-S block **525** may convert the parallel signals into a sequence of modulation symbols. The channel decoding and demodulation block **526** may perform a demodulation operation on the modulation symbols and may restore data by performing a decoding operation on a result of the demodulation operation.

In FIGS. 5A and **5**B, discrete Fourier transform (DFT) and inverse DFT (IDFT) may be used instead of FFT and IFFT. Each of the blocks (e.g., components) in FIGS. **5**A and **5**B may be implemented by at least one of hardware, software, or firmware. For example, some blocks in FIGS. 5A and **5**B may be implemented by software, and other blocks may be implemented by hardware or a combination of hardware and software. In FIGS. 5A and **5**B, one block may be subdivided into a plurality of blocks, a plurality of blocks may be integrated into one block, some blocks may be omitted, and blocks supporting other functions may be added.

Meanwhile, communications between the UEs **235** and **236** may be performed based on sidelink communication technology (e.g., ProSe communication technology, D2D communication technology). The sidelink communication may be performed based on a one-to-one scheme or a one-to-many scheme. When V2V communication is performed using sidelink communication technology, the UE **235** may refer to a communication node located in the first vehicle **100** of FIG. **1****,** and the UE **236** may refer to a communication node located in the second vehicle **110** of FIG. **1****.** When V2I communication is performed using sidelink communication technology, the UE **235** may refer to a communication node located in the first vehicle **100** of FIG. **1****,** and the UE **236** may refer to a communication node located in the infrastructure **120** of FIG. **1****.** When V2P communication is performed using sidelink communication technology, the UE **235** may refer to a communication node located in the first vehicle **100** of FIG. **1****,** and the UE **236** may refer to a communication node carried by the person **130.**

The scenarios to which the sidelink communications are applied may be classified as shown below in Table 1 according to the positions of the UEs (e.g., the UEs **235** and **236**) participating in the sidelink communications. For example, the scenario for the sidelink communications between the UEs **235** and **236** shown in FIG. **2** may be a sidelink communication scenario C.

**[Table 1]**

| **Sidelink Communication Scenario** | **Position of UE#5 235** | **Position of UE#6 236** |
|---|---|---|
| #A | Out of coverage of base station 210 | Out of coverage of base station 210 |
| #B | In coverage of base station 210 | Out of coverage of base station 210 |
| #C | In coverage of base station 210 | In coverage of base station 210 |
| #D | In coverage of base station 210 | In coverage of other base station |

Meanwhile, a user plane protocol stack of the UEs (e.g., the UEs **235** and **236**) performing sidelink communications may be configured as follows.

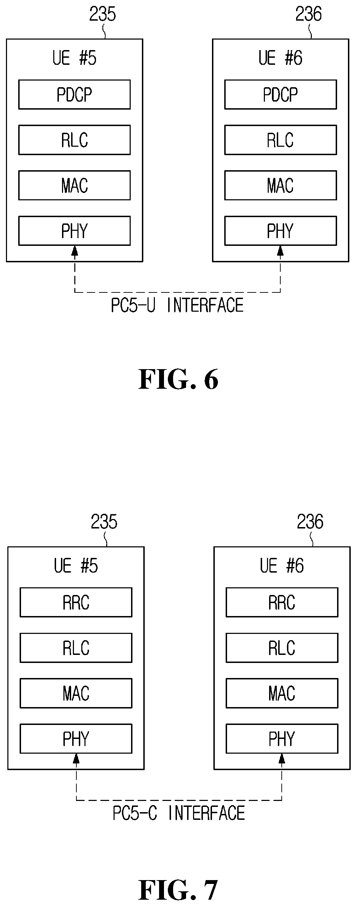

FIG. **6** is a block diagram illustrating an exemplary embodiment of a user plane protocol stack of a UE performing sidelink communication.

As shown in FIG. **6****,** the UE **235** may be the UE **235** shown in FIG. **2** and the UE **236** may be the UE **236** shown in FIG. **2****.** The scenario for the sidelink communications between the UEs **235** and **236** may be one of the sidelink communication scenarios A to D of Table 1. The user plane protocol stack of each of the UEs **235** and **236** may comprise a physical (PHY) layer, a medium access control (MAC) layer, a radio link control (RLC) layer, and a packet data convergence protocol (PDCP) layer.

The sidelink communications between the UEs **235** and **236** may be performed using a PC5 interface (e.g., PC5-U interface). A layer-2 identifier (ID) (e.g., a source layer-2 ID, a destination layer-2 ID) may be used for the sidelink communications, and the layer 2-ID may be an ID configured for the V2X communications. Also, in the sidelink communications, a hybrid automatic repeat request (HARQ) feedback operation may be supported, and an RLC acknowledged mode (RLC AM) or an RLC unacknowledged mode (RLC UM) may be supported.

Meanwhile, a control plane protocol stack of the UEs (e.g., the UEs **235** and **236**) performing sidelink communications may be configured as follows.

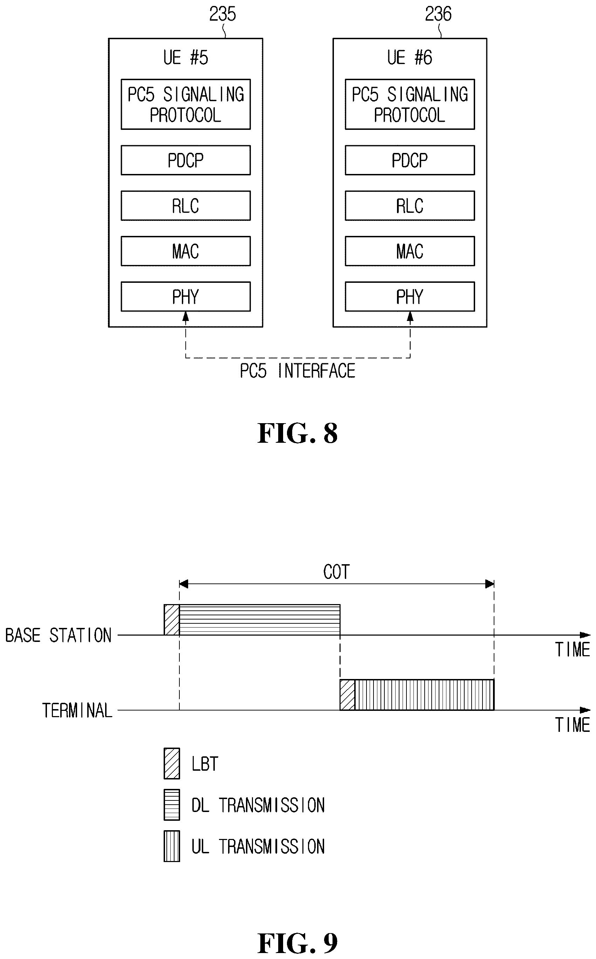

FIG. 7 is a block diagram illustrating a first exemplary embodiment of a control plane protocol stack of a UE performing sidelink communication, and FIG. **8** is a block diagram illustrating a second exemplary embodiment of a control plane protocol stack of a UE performing sidelink communication.

As shown in FIGS. **7** and **8****,** the UE **235** may be the UE **235** shown in FIG. 2 and the UE **236** may be the UE **236** shown in FIG. **2****.** The scenario for the sidelink communications between the UEs **235** and **236** may be one of the sidelink communication scenarios A to D of Table 1. The control plane protocol stack illustrated in FIG. **7** may be a control plane protocol stack for transmission and reception of broadcast information (e.g., Physical Sidelink Broadcast Channel (PSBCH)).

The control plane protocol stack shown in FIG. **7** may include a PHY layer, a MAC layer, an RLC layer, and a radio resource control (RRC) layer. The sidelink communications between the UEs **235** and **236** may be performed using a PC5 interface (e.g., PC5-C interface). The control plane protocol stack shown in FIG. **8** may be a control plane protocol stack for one-to-one sidelink communication. The control plane protocol stack shown in FIG. **8** may include a PHY layer, a MAC layer, an RLC layer, a PDCP layer, and a PC5 signaling protocol layer.

Meanwhile, channels used in the sidelink communications between the UEs **235** and **236** may include a Physical Sidelink Shared Channel (PSSCH), a Physical Sidelink Control Channel (PSCCH), a Physical Sidelink Discovery Channel (PSDCH), a Physical Sidelink Broadcast Channel (PSBCH) and a PSFCH(Physical Sidelink Feedback Channel). The PSSCH may be used for transmitting and receiving sidelink data and may be configured in the UE (e.g., UE **235** or **236)** by higher layer signaling. The PSCCH may be used for transmitting and receiving sidelink control information (SCI) and may also be configured in the UE (e.g., UE **235** or **236)** by higher layer signaling.

The PSDCH may be used for a discovery procedure. For example, a discovery signal may be transmitted over the PSDCH. The PSBCH may be used for transmitting and receiving broadcast information (e.g., system information). Also, a demodulation reference signal (DM-RS), a synchronization signal, or the like may be used in the sidelink communications between the UEs **235** and **236.** The synchronization signal may include a primary sidelink synchronization signal (PSSS) and a secondary sidelink synchronization signal (SSSS).

Meanwhile, a sidelink transmission mode (TM) may be classified into sidelink TMs 1 to 4 as shown below in Table 2.

**[Table 2]**

| **Sidelink TM** | **Description** |
|---|---|
| 1 | Transmission using resources scheduled by base station |
| 2 | UE autonomous transmission without scheduling of base station |
| 3 | Transmission using resources scheduled by base station in V2X communications |
| 4 | UE autonomous transmission without scheduling of base station in V2X communications |

When the sidelink TM 3 or 4 is supported, each of the UEs 235 and 236 may perform sidelink communications using a resource pool configured by the base station 210. The resource pool may be configured for each of the sidelink control information and the sidelink data.

The resource pool for the sidelink control information may be configured based on an RRC signaling procedure (e.g., a dedicated RRC signaling procedure, a broadcast RRC signaling procedure). The resource pool used for reception of the sidelink control information may be configured by a broadcast RRC signaling procedure. When the sidelink TM 3 is supported, the resource pool used for transmission of the sidelink control information may be configured by a dedicated RRC signaling procedure. In the instant case, the sidelink control information may be transmitted through resources scheduled by the base station **210** within the resource pool configured by the dedicated RRC signaling procedure. When the sidelink TM 4 is supported, the resource pool used for transmission of the sidelink control information may be configured by a dedicated RRC signaling procedure or a broadcast RRC signaling procedure. In the instant case, the sidelink control information may be transmitted through resources selected autonomously by the UE (e.g., UE **235** or **236)** within the resource pool configured by the dedicated RRC signaling procedure or the broadcast RRC signaling procedure.

When the sidelink TM 3 is supported, the resource pool for transmitting and receiving sidelink data may not be configured. In the instant case, the sidelink data may be transmitted and received through resources scheduled by the base station **210.** When the sidelink TM 4 is supported, the resource pool for transmitting and receiving sidelink data may be configured by a dedicated RRC signaling procedure or a broadcast RRC signaling procedure. In the instant case, the sidelink data may be transmitted and received through resources selected autonomously by the UE (e.g., UE **235** or **236)** within the resource pool configured by the dedicated RRC signaling procedure or the broadcast RRC signaling procedure.

Hereinafter, sidelink communication methods will be described. Even when a method (e.g., transmission or reception of a signal) to be performed at a first communication node among communication nodes is described, a corresponding second communication node may perform a method (e.g., reception or transmission of the signal) corresponding to the method performed at the first communication node. That is, when an operation of a UE #1 (e.g., vehicle #1) is described, a UE #2 (e.g., vehicle #2) corresponding thereto may perform an operation corresponding to the operation of the UE #1. Conversely, when an operation of the UE #2 is described, the corresponding UE #1 may perform an operation corresponding to the operation of the UE #2. In exemplary embodiments described below, an operation of a vehicle may be an operation of a communication node located in the vehicle.

A sidelink signal may be a synchronization signal and a reference signal used for sidelink communication. For example, the synchronization signal may be a synchronization signal/physical broadcast channel (SS/PBCH) block, sidelink synchronization signal (SLSS), primary sidelink synchronization signal (PSSS), secondary sidelink synchronization signal (SSSS), or the like. The reference signal may be a channel state information-reference signal (CSI-RS), DM-RS, phase tracking-reference signal (PT-RS), cell-specific reference signal (CRS), sounding reference signal (SRS), discovery reference signal (DRS), or the like.

A sidelink channel may be a PSSCH, PSCCH, PSDCH, PSBCH, physical sidelink feedback channel (PSFCH), or the like. In addition, a sidelink channel may refer to a sidelink channel including a sidelink signal mapped to specific resources in the corresponding sidelink channel. The sidelink communication may support a broadcast service, a multicast service, a groupcast service, and a unicast service.

The base station may transmit system information (e.g., SIB12, SIB13, SIB14) and RRC messages including configuration information for sidelink communication (i.e. sidelink configuration information) to UE(s). The UE may receive the system information and RRC messages from the base station, identify the sidelink configuration information included in the system information and RRC messages, and perform sidelink communication based on the sidelink configuration information. The SIB12 may include sidelink communication/discovery configuration information. The SIB13 and SIB14 may include configuration information for V2X sidelink communication.

The sidelink communication may be performed within a SL bandwidth part (BWP). The base station may configure SL BWP(s) to the UE using higher layer signaling. The higher layer signaling may include SL-BWP-Config and/or SL-BWP-ConfigCommon. SL-BWP-Config may be used to configure a SL BWP for UE-specific sidelink communication. SL-BWP-ConfigCommon may be used to configure cell-specific configuration information.

Furthermore, the base station may configure resource pool(s) to the UE using higher layer signaling. The higher layer signaling may include SL-BWP-PoolConfig, SL-BWP-PoolConfigCommon, SL-BWP-DiscPoolConfig, and/or SL-BWP-DiscPoolConfigCommon. SL-BWP-PoolConfig may be used to configure a sidelink communication resource pool. SL-BWP-PoolConfigCommon may be used to configure a cell-specific sidelink communication resource pool. SL-BWP-DiscPoolConfig may be used to configure a resource pool dedicated to UE-specific sidelink discovery. SL-BWP-DiscPoolConfigCommon may be used to configure a resource pool dedicated to cell-specific sidelink discovery. The UE may perform sidelink communication within the resource pool configured by the base station.

The sidelink communication may support SL discontinuous reception (DRX) operations. The base station may transmit a higher layer message (e.g., SL-DRX-Config) including SL DRX-related parameter(s) to the UE. The UE may perform SL DRX operations based on SL-DRX-Config received from the base station. The sidelink communication may support inter-UE coordination operations. The base station may transmit a higher layer message (e.g., SL-InterUE-CoordinationConfig) including inter-UE coordination parameter(s) to the UE. The UE may perform inter-UE coordination operations based on SL-InterUE-CoordinationConfig received from the base station.

The sidelink communication may be performed based on a single-SCI scheme or a multi-SCI scheme. When the single-SCI scheme is used, data transmission (e.g., sidelink data transmission, sidelink-shared channel (SL-SCH) transmission) may be performed based on one SCI (e.g., 1st-stage SCI). When the multi-SCI scheme is used, data transmission may be performed using two SCIs (e.g., 1st-stage SCI and 2nd-stage SCI). The SCI(s) may be transmitted on a PSCCH and/or a PSSCH. When the single-SCI scheme is used, the SCI (e.g., 1st-stage SCI) may be transmitted on a PSCCH. When the multi-SCI scheme is used, the 1st-stage SCI may be transmitted on a PSCCH, and the 2nd-stage SCI may be transmitted on the PSCCH or a PSSCH. The 1st-stage SCI may be referred to as 'first-stage SCI', and the 2nd-stage SCI may be referred to as 'second-stage SCI'. A format of the first-stage SCI may include a SCI format 1-A, and a format of the second-stage SCI may include a SCI format 2-A, a SCI format 2-B, and a SCI format 2-C.

The SCI format 1-A may be used for scheduling a PSSCH and second-stage SCI. The SCI format 1-A may include at least one among priority information, frequency resource assignment information, time resource assignment information, resource reservation period information, demodulation reference signal (DMRS) pattern information, second-stage SCI format information, beta_offset indicator, number of DMRS ports, modulation and coding scheme (MCS) information, additional MCS table indicator, PSFCH overhead indicator, or conflict information receiver flag.

The SCI format 2-A may be used for decoding of a PSSCH. The SCI format 2-A may include at least one among a HARQ processor number, new data indicator (NDI), redundancy version (RV), source ID, destination ID, HARQ feedback enable/disable indicator, cast type indicator, or CSI request.

The SCI format 2-B may be used for decoding of a PSSCH. The SCI format 2-B may include at least one among a HARQ processor number, NDI, RV, source ID, destination ID, HARQ feedback enable/disable indicator, zone ID, or communication range requirement.

The SCI format 2-C may be used for decoding of a PSSCH. In addition, the SCI format 2-C may be used to provide or request inter-UE coordination information. The SCI format 2-C may include at least one among a HARQ processor number, NDI, RV, source ID, destination ID, HARQ feedback enable/disable indicator, CSI request, or providing/requesting indicator.

When a value of the providing/requesting indicator is set to 0, this may indicate that the SCI format 2-C is used to provide inter-UE coordination information. In the instant case, the SCI format 2-C may include at least one among resource combinations, first resource location, reference slot location, resource set type, or lowest subchannel indexes.

When a value of the providing/requesting indicator is set to 1, this may indicate that the SCI format 2-C is used to request inter-UE coordination information. In the instant case, the SCI format 2-C may include at least one among a priority, number of subchannels, resource reservation period, resource selection window location, resource set type, or padding bit(s).

Meanwhile, sidelink communication may be performed in a licensed band and/or an unlicensed band. Sidelink communication performed in an unlicensed band may be referred to as sidelink-unlicensed band (SL-U) communication or unlicensed band-sidelink (U-SL) communication. In SL-U communication, a first terminal may perform communication with a second terminal according to mode 1 or mode 2. When mode 1 is used, the first terminal may perform communication with the second terminal based on scheduling of a base station. When mode 2 is used, the first terminal may perform communication with the second terminal without scheduling of a base station. Mode 1 may be sidelink TM #1 or #3 disclosed in Table 2 above. Mode 2 may be sidelink TM #2 or #4 disclosed in Table 2 above.

FIG. 9 is a timing diagram illustrating embodiments of communication methods in an unlicensed band.

Referring to FIG. 9, a base station may perform an LBT (listen before talk) operation to perform DL (downlink) transmission, and may perform DL transmission if the result of the LBT operation is in an idle state (e.g., a clean state) of the channel. A terminal may perform an LBT operation to perform UL (uplink) transmission, and may perform UL transmission if the result of the LBT operation is in an idle state of the channel. If the result of the LBT operation is in a busy state of the channel, DL transmission and/or UL transmission may not be performed. The DL transmission and/or UL transmission may be performed within a COT (channel occupancy time). The COT may be initiated by the base station or the terminal. The LBT operation may be performed based on the categories disclosed in Table 3 below.

**[Table 3]**

| | Description |
|---|---|
| Category 1 (Cat 1 LBT) | Transmission operation is performed after a short switching gap of 16 µ. CCA operation is not performed. |
| Category 2 (Cat 2 LBT) | LBT operation is performed in a fixed CCA period (e.g., 25 µs) without random backoff operation. |
| Category 3 (Cat 3 LBT) | LBT operation is performed based on random backoff operation and variable extension CCA period. The size of contention window is fixed. |
| Category 1 (Cat 3 LBT) | LBT operation is performed based on random backoff operation and variable extension CCA period. The size of contention window is variable. |

The LBT operation may mean a CCA (clear channel assessment) operation. The CCA operation may be performed during a CCA period. When the CCA operation is performed, a communication node (e.g., a base station and/or a terminal) may check a channel state based on an ED (energy detection) method. In other words, the communication node may check whether another signal is present in a channel. If the energy detected during the CCA period is less than a threshold value (e.g., an ED threshold value), the communication node may determine that the channel state is an idle state. In other words, the communication node may determine that no other signal is present in the channel. If the channel state is an idle state, the communication node may access the channel within the COT. If the energy detected during the CCA period is greater than or equal to the threshold value, the communication node may determine that the channel state is a busy state. In other words, the communication node may determine that another signal is present in the channel. If the channel state is a busy state, the communication node may not access the channel within the COT.

In an unlicensed band, the communication node may perform an LBT operation and transmit data when the result of the LBT operation is in an idle state of the channel. In this case, the base station may transmit a DL transmission burst within the COT, and the terminal may transmit a UL transmission burst within the COT. The COT may be set within the MCOT (maximum COT). The slot duration of the CCA may be 5 µs to 9 µs. The duration of the MCOT may be 8 ms. The base station may initiate and/or configure the COT based on the higher layer parameter *SemiStaticChannelAccessConfig.* The *SemiStaticChannelAccessConfig* may include period information of the COT. The terminal may identify the COT initiated by the base station based on the *SemiStaticChannelAccessConfig.*

The terminal may initiate and/or configure the COT based on the higher layer parameter *SemiStaticChannelAccessConfigUE. SemiStaticChannelAccessConfigUE* may include period information and offset information of the COT. The base station may identify the COT initiated by the terminal based on *SemiStaticChannelAccessConfigUE.*

The terminal may initiate and/or configure the COT based on *SemiStaticChannelAccessConfigUE* in an unlicensed band. Alternatively, the base station may signal *SemiStaticChannelAccessConfigSL-U* for the COT of SL-U communication to the terminal. The COT for SL-U communication may be referred to as SL(sidelink)-COT. *SemiStaticChannelAccessConfigSL-U* may include period information and offset information of SL-COT. The terminal may configure SL-COT based on *SemiStaticChannelAccessConfigSL-U.* Other terminals may identify the COT initiated based on *SemiStaticChannelAccessConfigSL-U.*

In an unlicensed band, the terminal may perform the LBT operation before the SL communication (e.g., transmission of SL data) in order to perform the SL communication. If the LBT operation is successful, the COT may be initiated in the unlicensed band, and the SL communication may be performed within the COT. "The LBT operation is successful" may mean "the result of the LBT operation is in an idle state."

In an unlicensed band, a channel access procedure may be classified into a DL channel access procedure and an UL channel access procedure. The DL channel access procedure may be classified into a Type 1 DL channel access procedure and a Type 2 DL channel access procedure. The Type 1 DL channel access procedure may be performed for initiation of a COT. The Type 2 DL channel access procedure may be performed for transmission within a COT (e.g., a shared COT). The channel access procedure may imply an LBT operation. The Type 1 DL channel access procedure may be performed for "at least one of a physical downlink shared channel (PDSCH) transmission, a physical downlink control channel (PDCCH) transmission, and an enhanced PDCCH (EPDCCH) transmission initiated by an eNB" and/or "any transmission initiated by a gNB." The eNB may mean a base station in a 4G communication system, and the gNB may mean a base station in a 5G communication system.

The Type 2 DL channel access procedure may be performed for " at least one of transmission of a discovery burst initiated by the eNB or transmissions not including a PDSCH" and/or "transmission of a discovery burst initiated by the gNB or discovery transmission multiplexed with non-unicast information". The Type 2 DL channel access procedure may be classified into a Type 2A DL channel access procedure, a Type 2B DL channel access procedure, and a Type 2C DL channel access procedure. The length of the sensing period (e.g., the sensing interval) in each of the Type 2A DL channel access procedure, the Type 2B DL channel access procedure, and the Type 2C DL channel access procedure may be different. The length of the sensing interval in the Type 2A DL channel access procedure may be 25 µs. The length of the sensing interval in the Type 2B DL channel access procedure may be 16 µs. Sensing operation may not be performed in the Type 2C DL channel access procedure.

The UL channel access procedure may be classified into a Type 1 UL channel access procedure and a Type 2 UL channel access procedure. The Type 1 UL channel access procedure may be performed for initiation of a COT. The Type 2 UL channel access procedure may be performed for transmission within a COT (e.g., a shared COT). The Type 1 UL channel access procedure may be performed for "at least one of a PUSCH (physical uplink shared channel) transmission or an SRS (sounding reference signal) transmission scheduled or configured by an eNB", "at least one of a PUSCH transmission or an SRS transmission scheduled or configured by a gNB", "a PUCCH transmission scheduled or configured by a gNB", and/or " transmission associated with a random access (RA) procedure".

The Type 2 UL channel access procedure may be classified into a Type 2A UL channel access procedure, a Type 2B UL channel access procedure, and a Type 2C UL channel access procedure. The length of the sensing period (e.g., sensing interval) in each of the Type 2A UL channel access procedure, the Type 2B UL channel access procedure, and the Type 2C UL channel access procedure may be different. The length of the sensing period in the Type 2A UL channel access procedure may be 25 µs. The length of the sensing period in the Type 2B UL channel access procedure may be 16 µs. Sensing operation may not be performed in the Type 2C UL channel access procedure,.

The Type 1 DL channel access procedure, the Type 2 DL channel access procedure, the Type 1 UL channel access procedure, and/or the Type 2 UL channel access procedure may be used for SL-U communication. In this case, in the description of the Type 1 DL channel access procedure, Type 2 DL channel access procedure, Type 1 UL channel access procedure, and/or Type 2 UL channel access procedure, the downlink channel and/or the uplink channel may be interpreted as a sidelink channel. The LBT operation may be interpreted as the Type 1 DL channel access procedure, the Type 2 DL channel access procedure, a new Type DL channel access procedure, the Type 1 UL channel access procedure, the Type 2 UL channel access procedure, and/or a new Type UL channel access procedure.

A UE may perform an SL channel access procedure. The SL channel access procedure may be performed to access a channel in an unlicensed band. The SL channel access procedure may be classified into a Type 1 SL channel access procedure and a Type 2 SL channel access procedure. The Type 2 SL channel access procedure may be classified into a Type 2A SL channel access procedure, a Type 2B SL channel access procedure, and a Type 2C SL channel access procedure. The Type 1 SL channel access procedure may be performed to initiate a COT. The Type 2 SL channel access procedure may be performed for SL transmission within a COT (e.g., shared COT, initiated COT). In the Type 1 SL channel access procedure, the UE may perform a random backoff operation. In the Type 2 SL channel access procedure, the UE may perform a channel sensing operation. The channel sensing operation may be performed within a sensing period. In the Type 2A DL channel access procedure, the length of the sensing period may be 25 µs. In the Type 2B DL channel access procedure, the length of the sensing interval may be 16 µs. In the Type 2C DL channel access procedure, the sensing operation may not be performed.

The UE may initiate a COT. The COT may stand for channel occupancy (CO). A UE that initiates a COT may be referred to as a COT initiating UE or an initiating UE. A signal initially transmitted by a COT initiating UE for initiation of a COT may be referred to as a COT initiating signal. The COT initiating signal may include a PSCCH, a PSSCH, a S(sidelink)-SSB (synchronization signal block), and/or a reference signal. The COT initiating signal may include COT sharing information. Alternatively, the COT sharing information may be transmitted independently from the COT initiating signal. The COT sharing information (e.g., a COT initiating signal including the COT sharing information) may be transmitted to the UE(s) via signaling. In the present disclosure, the signaling may be at least one of higher layer signaling (e.g., transmission of an RRC message), MAC signaling (e.g., transmission of a MAC CE), or PHY signaling (e.g., transmission of an SCI).

The COT sharing information may include at least one of a source identifier (ID) (e.g., a layer 1 source ID), a destination ID (e.g., a layer 1 destination ID), a channel access priority class (CAPC) (e.g., a CAPC level), remaining COT duration, total COT duration, maximum COT, frequency domain information for RB (resource block) set(s) of the COT (e.g., applicable RB set(s)), additional ID(s) (e.g., additional source ID, additional destination ID), or an associated cast type. Each of the remaining COT duration and the total COT duration may be indicated in units of the number of slots or milliseconds (ms). The additional ID(s) may include a pair of a layer 1 source ID and a layer 1 destination ID. The source ID (e.g., layer 1 source ID) may be set to the source ID of the UE initiating the COT for unicast. The source ID (e.g., layer 1 source ID) may be set to reserved bits for groupcast and broadcast.

The destination ID of the SL transmission performed in the COT shared by the COT sharing information may match the source ID (e.g., additional source ID) included in the COT sharing information, and the source ID of the SL transmission performed in the COT shared by the COT sharing information may match the destination ID (e.g., additional destination ID) included in the COT sharing information. The SL transmission in the COT shared by the COT sharing information may be performed within the frequency resources (e.g., RB set(s)) indicated by the "frequency domain information for RB set(s)" included in the COT sharing information. The SL transmission having the same CAPC as the CAPC included in the COT sharing information may be performed in the COT shared by the COT sharing information. Alternatively, the SL transmission associated with the CAPC having a higher priority than the CAPC included in the COT sharing information may be performed in the COT shared by the COT sharing information. SL transmission in a COT shared by COT sharing information may be performed based on a cast type (e.g., unicast, groupcast, and/or broadcast) indicated by the "associated cast type" included in the COT sharing information.

A target RX-UE may mean an RX-UE that is a reception target (e.g., a destination) for a transmission signal (e.g., an SL transmission) of a TX-UE. A non-target RX-UE may mean an RX-UE that attempts (e.g., may attempt) to receive a transmission signal of the TX-UE among UEs other than the reception target for the transmission signal of the TX-UE. In other words, a non-target RX-UE is not a reception target for the transmission signal of the TX-UE, but may decode the transmission signal of the TX-UE.

Within a shared COT, a UE may receive SL transmission of a COT initiating UE. When the SL transmission of the COT initiating UE is received, the UE may perform SL transmission after performing a Type 1 SL channel access procedure or a Type 2 SL channel access procedure within the shared COT. In the present disclosure, the SL transmission may mean transmission of an SL channel and/or an SL signal. The SL channel may be a PSSCH, a PSCCH, a PSDCH, a PSBCH, and/or a PSFCH. The SL signal may be an S-SSB and/or a reference signal. The SL transmission of the COT initiating UE may include COT sharing information.

The UE which has received the SL transmission of the COT initiating UE (e.g., the UE performing SL transmission within the shared COT) may be restricted to be a target RX-UE for the COT initiating UE. In other words, the target RX-UE that has successfully decoded SL transmission of the COT initiating UE may use the shared COT, and a non-target RX-UE that has successfully decoded SL transmission of the COT initiating UE may not use the shared COT. Alternatively, the UE receiving the SL transmission of the COT initiating UE (e.g., the UE performing the SL transmission within the shared COT) may include a target RX-UE and a non-target RX-UE for the COT initiating UE.

In the present disclosure, the RX-UE may be classified into a 1-hop RX-UE, a 2-hop RX-UE, a 3-hop RX-UE, etc. A 1-hop RX-UE may be referred to as a 1-hop UE, a 2-hop RX-UE may be referred to as a 2-hop UE, and a 3-hop RX-UE may be referred to as a 3-hop UE. An n-hop RX-UE (e.g., an n-hop UE) may be determined based on a COT initiating UE. n may be a natural number. A 1-hop RX-UE may receive COT sharing information from a COT initiating UE, and may perform SL transmission by performing a channel access procedure within a COT shared by the COT sharing information. A 1-hop RX-UE may perform SL transmission within a shared COT, and an RX-UE that is a reception target (e.g., a destination) of the SL transmission of the 1-hop RX-UE may be a 2-hop RX-UE.

### [Embodiment 1] Operation method of COT sharing for 2-hop RX-UE

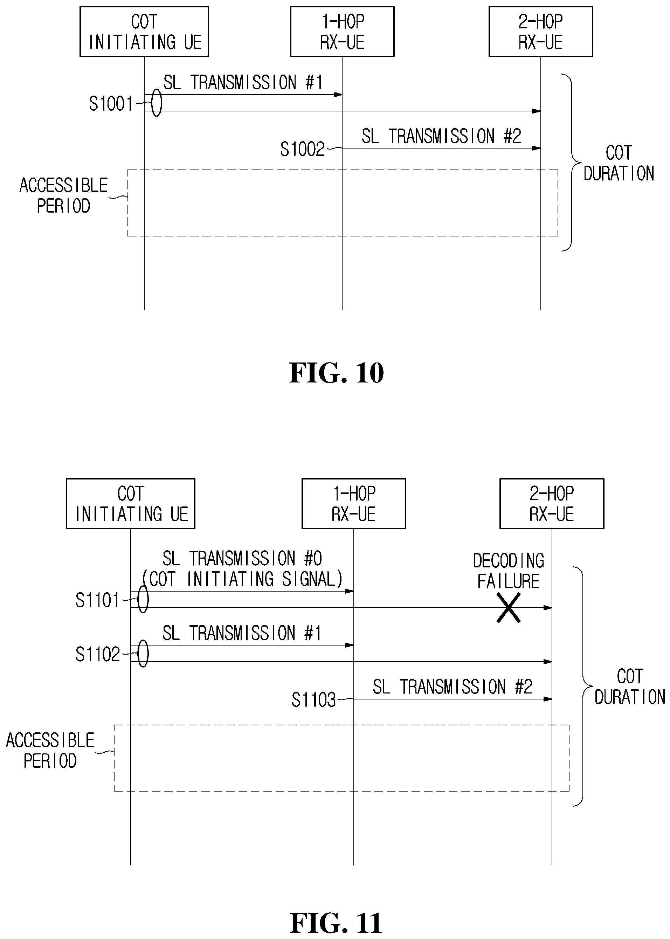

FIG. 10 is a flowchart illustrating a first embodiment of an SL-U communication method.

Referring to FIG. 10, SL communication between a COT initiating UE and a 1-hop RX-UE based on the COT initiating UE may be 1-hop SL communication, and SL communication between a 1-hop RX-UE and a 2-hop RX-UE based on the COT initiating UE may be 2-hop SL communication. The COT initiating UE may initiate a COT. The COT initiating UE may transmit SL transmission #1 to the 1-hop RX-UE in a COT (e.g., COT duration) (S1001). The 1-hop RX-UE may receive SL transmission #1 from the COT initiating UE. The SL transmission #1 may be transmission of PSCCH and/or PSSCH. The SL transmission #1 may be transmission of a COT initiating signal. The SL transmission #1 may include COT sharing information. In S1001, a reception target (e.g., destination) of SL transmission #1 may be the 1-hop RX-UE. The 2-hop RX-UE may not be the reception target of SL transmission #1. The 2-hop RX-UE is not the reception target of SL transmission #1, but the 2-hop RX-UE may receive SL transmission #1 from the COT initiating UE.

The COT initiated by the COT initiating UE may be shared with the 1-hop RX-UE. The 1-hop RX-UE may transmit SL transmission #2 to the 2-hop RX-UE in the shared COT (S 1002). The 2-hop RX-UE may receive SL transmission #2 from the 1-hop RX-UE. The SL transmission #2 may include COT sharing information. In other words, the 2-hop RX-UE may obtain COT sharing information (e.g., COT sharing information of the COT initiating UE) from the 1-hop RX-UE. In S1002, a reception target (e.g., a destination) of the SL transmission #2 may be the 2-hop RX-UE. The 2-hop RX-UE may perform SL transmission within the shared COT (e.g., the COT initiated by the COT initiating UE) if predefined condition(s) are satisfied. If the predefined condition(s) are satisfied as in the following methods, the 2-hop RX-UE may perform a channel access procedure (e.g., Type 2 SL channel access procedure) within the shared COT.

### (Method 1)

"If the 2-hop RX-UE receives COT sharing information from the COT initiating UE, and the 2-hop RX-UE receives SL transmission from the 1-hop RX-UE", the 2-hop RX-UE may perform a channel access procedure within the shared COT (e.g., the COT shared by the COT initiating UE). The 2-hop RX-UE may perform a channel access procedure (e.g., a Type 2 SL channel access procedure) in an accessible period after SL transmission #2, and if the channel access procedure is successful, may transmit the SL transmission to another UE (e.g., a UE other than the COT initiating UE and the 1-hop RX-UE). The accessible period may be set as a period after SL transmission #2 until an end time point of the COT (e.g., COT duration). Information about the COT duration and/or a specific time point may be included in the COT sharing information. The COT sharing information may be included in SL transmission #1 and/or SL transmission #2.

### (Method 2)

"If the 2-hop RX-UE receives the COT sharing information from the COT initiating UE, and the 2-hop RX-UE receives SL transmission from the 1-hop RX-UE, and a reception target (e.g., a destination) of the SL transmission of the 2-hop RX-UE is the COT initiating UE", the 2-hop RX-UE may perform a channel access procedure (e.g., a Type 2 SL channel access procedure) for the SL transmission within the shared COT (e.g., the COT shared by the COT initiating UE), and if the channel access procedure is successful, may transmit the SL transmission to the COT initiating UE. The channel access procedure of the 2-hop RX-UE may be performed in an accessible period after SL transmission #2.

### (Method 3)

"If the 2-hop RX-UE receives the COT sharing information from the COT initiating UE, and the 2-hop RX-UE receives SL transmission from the 1-hop RX-UE, and a reception target (e.g., a destination) of the SL transmission of the 2-hop RX-UE is the 1-hop RX-UE", the 2-hop RX-UE may perform a channel access procedure (e.g., a Type 2 SL channel access procedure) for the SL transmission within the shared COT (e.g., the COT shared by the COT initiating UE), and if the channel access procedure is successful, may transmit the SL transmission to the 1-hop RX-UE. The channel access procedure of the 2-hop RX-UE may be performed in an accessible period after SL transmission #2.

### (Method 4)

"If the 2-hop RX-UE receives the COT sharing information from the COT initiating UE, and the 2-hop RX-UE receives SL transmission from the 1-hop RX-UE, and a reception target (e.g., a destination) of the SL transmission of the 2-hop RX-UE is the COT initiating UE or the 1-hop RX-UE", the 2-hop RX-UE may perform a channel access procedure (e.g., a Type 2 SL channel access procedure) for the SL transmission within the shared COT (e.g., the COT shared by the COT initiating UE), and if the channel access procedure is successful, may transmit the SL transmission to the COT initiating UE or the 1-hop RX-UE. The channel access procedure of the 2-hop RX-UE may be performed in an accessible period after SL transmission #2.

In FIG. 10, SL transmission #1 may be a COT initiating signal. Alternatively, SL transmission #1 in FIG. 10 may be another signal after the COT initiating signal. SL transmission #1 in FIG. 10 may be COT sharing information. In cases where SL transmission #1 is limited to the COT initiating signal in Methods 1 to 4 above, SL transmission within the shared COT may be performed as in the embodiment of FIG. 11 below.

FIG. 11 is a flowchart illustrating a second embodiment of an SL-U communication method.

Referring to FIG. 11, SL communication between a COT initiating UE and a 1-hop RX-UE based on the COT initiating UE may be 1-hop SL communication, and SL communication between the 1-hop RX-UE and a 2-hop RX-UE based on the COT initiating UE may be 2-hop SL communication. The COT initiating UE may initiate a COT. The COT initiating UE may transmit SL transmission #0 to the 1-hop RX-UE in the COT (e.g., COT duration) (S1101). The SL transmission #0 may be transmission of a COT initiating signal. A reception target (e.g., destination) of SL transmission #0 in S1101 may be the 1-hop RX-UE. The 2-hop target RX-UE may not be a reception target of SL transmission #0. The 1-hop RX-UE may receive SL transmission #0 from the COT initiating UE.

The 2-hop target RX-UE is not a reception target of SL transmission #0, but the 2-hop target RX-UE may attempt to receive SL transmission #0 of the COT initiating UE. The 2-hop RX-UE may fail to receive SL transmission #0 of the COT initiating UE. If reception of SL transmission #0 of the COT initiating UE fails, the 2-hop RX-UE may not perform a channel access procedure in the accessible period after SL transmission #2 regardless of whether SL transmission #1 and/or SL transmission #2 are received. The accessible period after SL transmission #2 may belong to a COT shared by the COT initiating UE (e.g., an initiated COT).

After performing SL transmission #0, the COT initiating UE may perform SL transmission #1 (S1102). The 1-hop RX-UE may receive SL transmission #1 from the COT initiating UE. The 2-hop RX-UE can receive SL transmission #1 from the COT initiating UE. The SL transmission #1 may include COT sharing information. Alternatively, the 1-hop RX-UE may fail to receive SL transmission #1 of the COT initiating UE. After receiving SL transmission #1, the 1-hop RX-UE may transmit SL transmission #2 to the 2-hop RX-UE (S1103). The 2-hop RX-UE may receive SL transmission #2 from the 1-hop RX-UE. The SL transmission #2 may include COT sharing information.

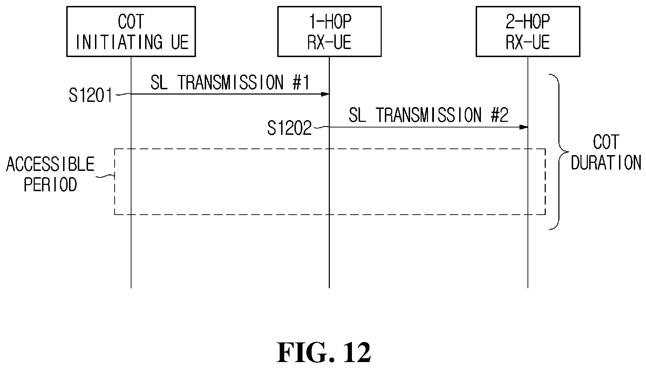

When Methods 1 to 4 above are applied, the 2-hop RX-UE may obtain the COT sharing information from SL transmission #2 received from the 1-hop RX-UE regardless of reception of SL transmission #0 and/or SL transmission #1 of the COT initiating UE, check a shared COT based on the COT sharing information, and perform a channel access procedure for SL transmission within the shared COT. For example, in FIG. 12 below, the 2-hop RX-UE may receive SL transmission #2 including COT sharing information from the 1-hop RX-UE without receiving SL transmission #1, and perform a channel access procedure for SL transmission within the shared COT (e.g., the COT shared by the COT initiating UE) based on the COT sharing information.

FIG. 12 is a flowchart illustrating a third embodiment of an SL-U communication method.

Referring to FIG. 12, SL communication between a COT initiating UE and a 1-hop RX-UE based on the COT initiating UE may be 1-hop SL communication, and SL communication between the 1-hop RX-UE and a 2-hop RX-UE based on the COT initiating UE may be 2-hop SL communication. The COT initiating UE may initiate a COT. The COT initiating UE may transmit SL transmission #1 to the 1-hop RX-UE in the COT (e.g., COT duration) (S1201). The 1-hop RX-UE may receive SL transmission #1 from the COT initiating UE. The SL transmission #1 may be transmission of PSCCH and/or PSSCH. The SL transmission #1 may be transmission of a COT initiating signal. The SL transmission #1 may include COT sharing information. In S1001, a reception target (e.g., destination) of SL transmission #1 may be the 1-hop RX-UE. The 2-hop target RX-UE may not be the reception target of SL transmission #1.

The COT initiated by the COT initiating UE may be shared with the 1-hop RX-UE. The 1-hop RX-UE may transmit SL transmission #2 in the shared COT to the 2-hop RX-UE (S1202). The 2-hop RX-UE may receive SL transmission #2 from the 1-hop RX-UE. The SL transmission #2 may include COT sharing information.

In the embodiments of FIGS. 11 and 12, if predefined condition(s) are satisfied as in the following methods, the 2-hop RX-UE may perform a channel access procedure (e.g., Type 2 SL channel access procedure) within the shared COT after receiving the SL transmission of the 1-hop RX-UE.

### (Method 5)

"If the 2-hop RX-UE receives SL transmission from the 1-hop RX-UE", the 2-hop RX-UE may perform a channel access procedure (e.g., a type 2 SL channel access procedure) within the shared COT (e.g., the COT shared by the COT initiating UE). The 2-hop RX-UE may check the COT sharing information of the COT initiating UE included in the SL transmission received from the 1-hop RX-UE. The 2-hop RX-UE may perform a channel access procedure in an accessible period after SL transmission #2, and if the channel access procedure is successful, may transmit the SL transmission to another UE (e.g., a UE other than the COT initiating UE and the 1-hop RX-UE).

### (Method 6)

"If the 2-hop RX-UE receives SL transmission from the 1-hop RX-UE, and a reception target (e.g., a destination) of the SL transmission of the 2-hop RX-UE is the COT initiating UE", the 2-hop RX-UE may perform a channel access procedure (e.g., a Type 2 SL channel access procedure) for the SL transmission within the shared COT (e.g., the COT shared by the COT initiating UE), and if the channel access procedure is successful, may transmit the SL transmission to the COT initiating UE. The 2-hop RX-UE may check COT sharing information of the COT initiating UE included in the SL transmission received from the 1-hop RX-UE. The channel access procedure of the 2-hop RX-UE may be performed in an accessible period after SL transmission #2.

### (Method 7)

"If the 2-hop RX-UE receives SL transmission from the 1-hop RX-UE, and a reception target (e.g., a destination) of the SL transmission of the 2-hop RX-UE is the 1-hop RX-UE", the 2-hop RX-UE may perform a channel access procedure (e.g., a Type 2 SL channel access procedure) for the SL transmission within the shared COT (e.g., the COT shared by the COT initiating UE), and if the channel access procedure is successful, may transmit the SL transmission to the 1-hop RX-UE. The 2-hop RX-UE may check COT sharing information of the COT initiating UE included in the SL transmission received from the 1-hop RX-UE. The channel access procedure of the 2-hop RX-UE may be performed in an accessible period after SL transmission #2.

### (Method 8)

"If the 2-hop RX-UE receives SL transmission from the 1-hop RX-UE, and a reception target (e.g., a destination) of the SL transmission of the 2-hop RX-UE is the COT initiating UE or the 1-hop RX-UE", the 2-hop RX-UE may perform a channel access procedure (e.g., a Type 2 SL channel access procedure) for the SL transmission within the shared COT (e.g., the COT shared by the COT initiating UE), and if the channel access procedure is successful, may transmit the SL transmission to the COT initiating UE or the 1-hop RX-UE. The 2-hop RX-UE may check the COT sharing information of the COT initiating UE included in the SL transmission received from the 1-hop RX-UE. The channel access procedure of the 2-hop RX-UE may be performed in an accessible period after SL transmission #2.

The COT sharing information sent via SL transmission in the embodiments of FIG. 10, FIG. 11, and/or FIG. 12 may include the following information element(s).
- Information element indicating whether the SL transmission including the COT sharing information is transmitted from the COT initiating UE
- Information element indicating whether the SL transmission including the COT sharing information is 1-hop transmission or 2-hop transmission based on the COT initiating UE
- Source ID (e.g., all or part of the source ID) and/or destination ID (e.g., all or part of the destination ID) of the SL transmission including the COT sharing information at each hop

Configuration information about the target that may perform SL transmission at each hop. For example, an information element indicating whether SL transmission is allowed to be transmitted to the COT initiating UE or a UE that performed SL transmission at a previous hop
- Configuration information about the target that may perform SL transmission at each hop. For example, an information element indicating whether SL transmission is allowed to be transmitted to another UE

Based on the COT sharing information (for example, information element(s) included in the COT sharing information), modifications of the above-described methods (for example, Methods 1 to 8), combinations of the above-described methods, and/or extensions of the above-described methods may be applied.

### [Embodiment 2] Operation method of COT sharing for 3 hops or more

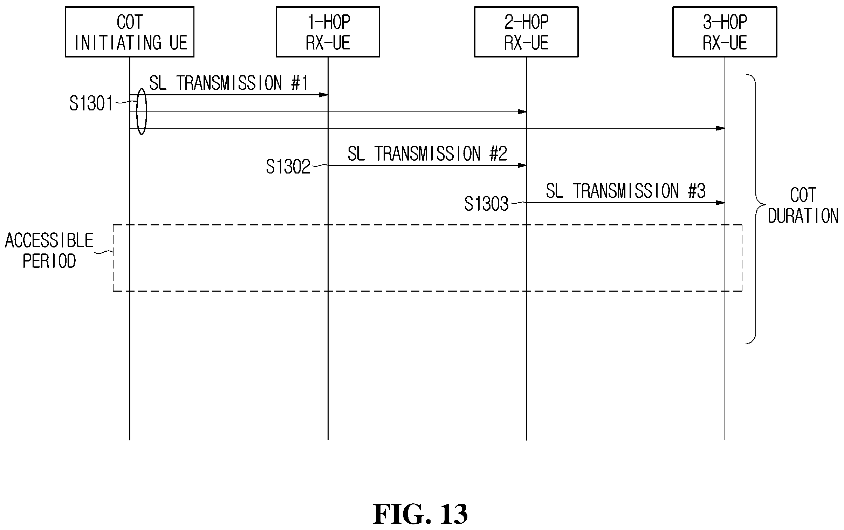

FIG. 13 is a flowchart illustrating a fourth embodiment of an SL-U communication method.

Referring to FIG. 13, SL communication between a COT initiating UE and a 1-hop RX-UE based on the COT initiating UE may be 1-hop SL communication, SL communication between the 1-hop RX-UE and a 2-hop RX-UE based on the COT initiating UE may be 2-hop SL communication, and SL communication between the 2-hop RX-UE and a 3-hop RX-UE based on the COT initiating UE may be 3-hop SL communication. The COT initiating UE may initiate a COT. The COT initiating UE may transmit SL transmission #1 to the 1-hop RX-UE in the COT (e.g., COT duration) (S1301). The 1-hop RX-UE may receive SL transmission #1 from the COT initiating UE. The SL transmission #1 may be transmission of a PSCCH and/or PSSCH. The SL transmission #1 may be transmission of a COT initiating signal. The SL transmission #1 may include COT sharing information. In S1301, a reception target (e.g., destination) of SL transmission #1 may be the 1-hop RX-UE. Each of the 2-hop RX-UE and the 3-hop RX-UE may not be the reception target of SL transmission #1. Each of the 2-hop RX-UE and the 3-hop RX-UE is not the reception target of SL transmission #1, but each of the 2-hop RX-UE and 3-hop RX-UE may receive SL transmission #1 (e.g., COT sharing information) of the COT initiating UE.

The COT initiated by the COT initiating UE may be shared with the 1-hop RX-UE. The 1-hop RX-UE may transmit SL transmission #2 in the shared COT to the 2-hop RX-UE (S 1302). The 2-hop RX-UE may be a target RX-UE for the 1-hop RX-UE. The 2-hop RX-UE may receive SL transmission #2 from the 1-hop RX-UE. The SL transmission #2 may include COT sharing information. In other words, the 2-hop RX-UE may obtain the COT sharing information (e.g., COT sharing information of the COT initiating UE) from the 1-hop RX-UE, and check the shared COT based on the COT sharing information. The 2-hop RX-UE may transmit SL transmission #3 in the shared COT to the 3-hop RX-UE (S1303). The 3-hop RX-UE may be a target RX-UE for the 2-hop RX-UE. The 3-hop RX-UE may receive SL transmission #3 from the 2-hop RX-UE. The SL transmission #3 may include COT sharing information. In other words, the 3-hop RX-UE may obtain the COT sharing information (e.g., the COT sharing information of the COT initiating UE) from the 2-hop RX-UE, and determine the shared COT based on the COT sharing information.

The 3-hop RX-UE may perform SL transmission within the shared COT (e.g., COT initiated by the COT initiating UE) if the predefined condition(s) are satisfied. The 3-hop RX-UE may perform a channel access procedure (e.g., Type 2 SL channel access procedure) within the shared COT if the predefined condition(s) are satisfied as in the following methods.

### (Method A)

"If the 3-hop RX-UE receives the COT sharing information from the COT initiating UE, and the 3-hop RX-UE receives SL transmission from the 2-hop RX-UE", the 3-hop RX-UE may perform a channel access procedure (e.g., a Type 2 SL channel access procedure) within the shared COT (e.g., the COT shared by the COT initiating UE). The 3-hop RX-UE may perform the channel access procedure in an accessible period after SL transmission #3, and if the channel access procedure is successful, may transmit SL transmission to another UE (e.g., another UE other than the COT initiating UE, the 1-hop RX-UE, and the 2-hop RX-UE). The accessible period may be set as a period from after SL transmission #3 to an end time point of the COT (e.g., COT duration). Information about the COT duration and/or a specific time point may be included in the COT sharing information. The COT sharing information may be included in SL transmission #1, SL transmission #2, and/or SL transmission #3.

### (Method B)

"If the 3-hop RX-UE receives the COT sharing information from the COT initiating UE, and the 3-hop RX-UE receives SL transmission from the 2-hop RX-UE, and a reception target (e.g., a destination) of the SL transmission of the 3-hop RX-UE is the COT initiating UE", the 3-hop RX-UE may perform a channel access procedure (e.g., a Type 2 SL channel access procedure) for the SL transmission within the shared COT (e.g., the COT shared by the COT initiating UE), and if the channel access procedure is successful, may transmit the SL transmission to the COT initiating UE. The channel access procedure of the 3-hop RX-UE may be performed in an accessible period after SL transmission #3.

### (Method C)

"If the 3-hop RX-UE receives the COT sharing information from the COT initiating UE, and the 3-hop RX-UE receives SL transmission from the 2-hop RX-UE, and a reception target (e.g., a destination) of the SL transmission of the 3-hop RX-UE is the 2-hop RX-UE", the 3-hop RX-UE may perform a channel access procedure (e.g., a Type 2 SL channel access procedure) for the SL transmission within the shared COT (e.g., the COT shared by the COT initiating UE), and if the channel access procedure is successful, may transmit the SL transmission to the 2-hop RX-UE. The channel access procedure of the 3-hop RX-UE may be performed in an accessible period after SL transmission #3.

### (Method D)

"If the 3-hop RX-UE receives the COT sharing information from the COT initiating UE, and the 3-hop RX-UE receives SL transmission from the 2-hop RX-UE, and a reception target (e.g., a destination) of the SL transmission of the 3-hop RX-UE is the COT initiating UE, the 1-hop RX-UE, or the 2-hop RX-UE", the 3-hop RX-UE may perform a channel access procedure (e.g., a Type 2 SL channel access procedure) for the SL transmission within the shared COT (e.g., the COT shared by the COT initiating UE), and if the channel access procedure is successful, may transmit the SL transmission to the COT initiating UE, the 1-hop RX-UE, or the 2-hop RX-UE. The channel access procedure of the 3-hop RX-UE may be performed in an accessible period after SL transmission #3.

In FIG. 13, SL transmission #1 may be a COT initiating signal. Alternatively, SL transmission #1 in FIG. 13 may be another signal after the COT initiating signal. In FIG. 13, SL transmission #1 may be COT sharing information. In Methods A to D above, SL transmission #1 may be limited to a COT initiating signal. If the 3-hop RX-UE fails to receive SL transmission #1, the 3-hop RX-UE may not perform a channel access procedure in the accessible period after SL transmission #3 regardless of whether SL transmission #2 and/or SL transmission #3 are received. The accessible period may belong to the shared COT.

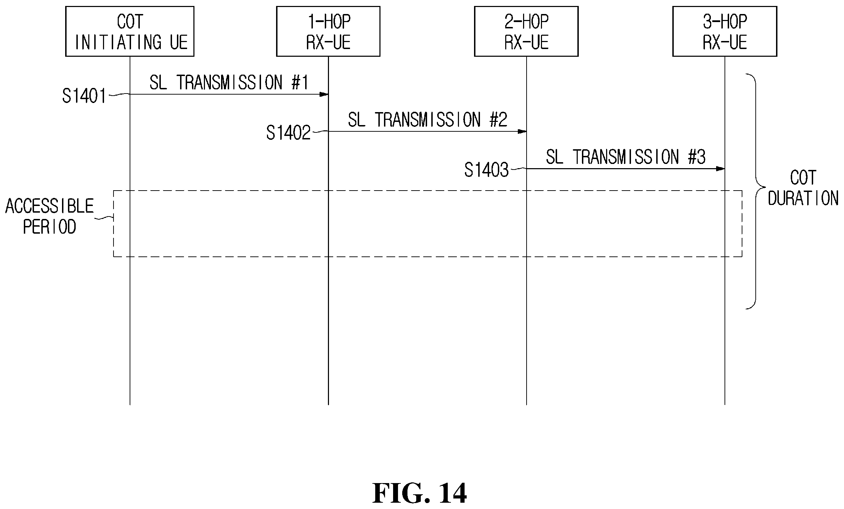

In the embodiment of FIG. 13, when Method A, Method B, Method C, and/or Method D are applied, the 3-hop RX-UE may obtain the COT sharing information through SL transmission #3 received from the 2-hop RX-UE regardless of reception of SL transmission #1 transmitted by the COT initiating UE and/or reception of SL transmission #2 transmitted by the 1-hop RX-UE, check the shared COT based on the COT sharing information and perform a channel access procedure within the shared COT. In the embodiment of FIG. 14 below, the 3-hop RX-UE may perform a channel access procedure within the shared COT after reception of SL transmission #3 including COT sharing information from the 2-hop RX-UE without receiving SL transmission #1 and SL transmission #2.

FIG. 14 is a flowchart illustrating a fifth embodiment of an SL-U communication method.

Referring to FIG. 14, SL communication between a COT initiating UE and a 1-hop RX-UE based on the COT initiating UE may be 1-hop SL communication, SL communication between the 1-hop RX-UE and a 2-hop RX-UE based on the COT initiating UE may be 2-hop SL communication, and SL communication between the 2-hop RX-UE and a 3-hop RX-UE based on the COT initiating UE may be 3-hop SL communication. The COT initiating UE may initiate a COT. The COT initiating UE may transmit SL transmission #1 to the 1-hop RX-UE in the COT (e.g., COT duration) (S1401). The 1-hop RX-UE may receive SL transmission #1 from the COT initiating UE. The SL transmission #1 may be transmission of a PSCCH and/or a PSSCH. The SL transmission #1 may be transmission of a COT initiating signal. SL transmission #1 may include COT sharing information. The 2-hop RX-UE and the 3-hop RX-UE may not receive SL transmission #1 from the COT initiating UE.

The COT initiated by the COT initiating UE may be shared with the 1-hop RX-UE. The 1-hop RX-UE may transmit SL transmission #2 in the shared COT to the 2-hop RX-UE (S1402). The 2-hop RX-UE may receive SL transmission #2 from the 1-hop RX-UE. The SL transmission #2 may include COT sharing information. The 3-hop RX-UE may not receive SL transmission #2 from the COT initiating UE. The COT initiated by the COT initiating UE may be shared with the 2-hop RX-UE. The 2-hop RX-UE may transmit SL transmission #3 in the shared COT to the 3-hop RX-UE (S1403). The 3-hop RX-UE may receive SL transmission #3 from the 2-hop RX-UE. The SL transmission #3 may include COT sharing information.

In the embodiment of FIG. 13, if the predefined condition(s) are satisfied as in the following methods, the 3-hop RX-UE may perform a channel access procedure within the shared COT after receiving the SL transmission of the 2-hop RX-UE.

### (Method E)

"When the 3-hop RX-UE receives SL transmission from the 2-hop RX-UE", the 3-hop RX-UE may perform a channel access procedure (e.g., a Type 2 SL channel access procedure) within the shared COT (e.g., the COT shared by the COT initiating UE). The 3-hop RX-UE may check COT sharing information of the COT initiating UE included in the SL transmission received from the 2-hop RX-UE. The 3-hop RX-UE may perform a channel access procedure in an accessible period after SL transmission #3, and may transmit the SL transmission to another UE if the channel access procedure is successful. The accessible period may belong to the shared COT.

### (Method F)

"If the 3-hop RX-UE receives SL transmission from the 2-hop RX-UE, and a reception target (e.g., a destination) of the SL transmission of the 3-hop RX-UE is the COT initiating UE", the 3-hop RX-UE may perform a channel access procedure (e.g., a Type 2 SL channel access procedure) for the SL transmission within the shared COT (e.g., the COT shared by the COT initiating UE), and if the channel access procedure is successful, may transmit the SL transmission to the COT initiating UE. The 3-hop RX-UE may check COT sharing information of the COT initiating UE included in the SL transmission received from the 2-hop RX-UE. The channel access procedure of the 3-hop RX-UE may be performed in an accessible period after SL transmission #3.

### (Method G)

"If the 3-hop RX-UE receives SL transmission from the 2-hop RX-UE, and a reception target (e.g., a destination) of the SL transmission of the 3-hop RX-UE is the 2-hop RX-UE", the 3-hop RX-UE may perform a channel access procedure (e.g., a Type 2 SL channel access procedure) for the SL transmission within the shared COT (e.g., the COT shared by a COT initiating UE), and if the channel access procedure is successful, may transmit the SL transmission to the 2-hop RX-UE. The 3-hop RX-UE may check COT sharing information of the COT initiating UE included in the SL transmission received from the 2-hop RX-UE. The channel access procedure of the 3-hop RX-UE may be performed in an accessible period after SL transmission #3.

### (Method H)

"If the 3-hop RX-UE receives SL transmission from the 2-hop RX-UE, and a reception target (e.g., a destination) of the SL transmission of the 3-hop RX-UE is the COT initiating UE or the 2-hop RX-UE", the 3-hop RX-UE may perform a channel access procedure (e.g., a Type 2 SL channel access procedure) for the SL transmission within the shared COT (e.g., the COT shared by the COT initiating UE), and if the channel access procedure is successful, may transmit the SL transmission to the COT initiating UE or the 2-hop RX-UE. The 3-hop RX-UE may check COT sharing information of the COT initiating UE included in the SL transmission received from the 2-hop RX-UE. The channel access procedure of the 3-hop RX-UE may be performed in an accessible period after SL transmission #3.

The COT sharing information sent via SL transmission in the embodiments of FIG. 13 and/or FIG. 14 may include the following information element(s).
- Information element indicating whether the SL transmission including the COT sharing information is transmitted from the COT initiating UE
- Information element indicating whether the SL transmission including the COT sharing information is 1-hop transmission, 2-hop transmission, or 3-hop transmission based on the COT initiating UE
- Source ID (e.g., all or part of the source ID) and/or destination ID (e.g., all or part of the destination ID) of the SL transmission including the COT sharing information at each hop
- Configuration information about the target that may perform SL transmission at each hop. For example, an information element indicating whether SL transmission is allowed to be transmitted to the COT initiating UE or a UE that performed SL transmission at a previous hop
- Configuration information about the target that may perform SL transmission at each hop. For example, an information element indicating whether SL transmission is allowed to be transmitted to another UE

Based on the COT sharing information (for example, information element(s) included in the COT sharing information), modifications of the above-described methods (for example, methods A to H), combinations of the above-described methods, and/or extensions of the above-described methods may be applied.

### [Embodiment 3] Operation method of COT sharing for multiple hops

Embodiment 3 may be a combination of Embodiments 1 and 2. In order to control COT sharing for multiple hops, RX-UEs from a 1-hop RX-UE to an n-hop RX-UE may be allowed to perform a channel access procedure for transmitting SL transmission to not only a UE that transmitted previous SL transmission but also other UEs than the UE that transmitted the previous SL transmission within a shared COT. RX-UEs after the n-hop RX-UE may be allowed to perform a channel access procedure for transmitting SL transmission to the UE that transmitted the previous SL transmission within the shared COT. In other words, RX-UEs after the n-hop RX-UE may not be allowed to perform a channel access procedure for transmitting SL transmission to other UEs than the UE that transmitted the previous SL transmission within the shared COT.

n may be a natural number. n (e.g., information about the n-hop RX-UE) may be configured RP (resource pool)-specifically or COT-specifically. n may be transmitted via signaling. The signaling may be at least one of SI (system information) signaling (e.g., transmission of MIB and/or SIB), higher layer signaling (e.g., transmission of RRC message), MAC signaling (e.g., transmission of MAC CE), or PHY signaling (e.g., transmission of SCI). All or part of n (e.g., information about the n-hop RX-UE) may be included in COT sharing information. The COT sharing information included in SL transmission may include information indicating which hop RX-UE the RX-UE receiving the SL transmission is. The COT sharing information included in SL transmission may include information indicating which hop RX-UE the RX-UE transmitting the SL transmission is.

For example, it may be allowed for RX-UEs from the 1-hop RX-UE to the 2-hop RX-UE to perform a channel access procedure for transmitting SL transmission not only to the UE that transmitted the previous SL transmission but also to other UEs than the UE that transmitted the previous SL transmission within the shared COT. It may be allowed for RX-UEs after the 2-hop RX-UE to perform a channel access procedure for transmitting SL transmission to the UE that transmitted the previous SL transmission within the shared COT. In other words, it may not be allowed for RX-UEs after the 2-hop RX-UE to perform a channel access procedure for transmitting SL transmission to other UEs than the UE that transmitted the previous SL transmission within the shared COT. In this case, the 2-hop RX-UE of FIG. 14 may perform a channel access procedure within the shared COT to transmit SL transmission to the COT initiating UE, the 1-hop RX-UE, and/or the 3-hop RX-UE. The 3-hop RX-UE of FIG. 14 may perform a channel access procedure within the shared COT only to transmit SL transmission to the 2-hop RX-UE.

Alternatively, it may be allowed for the 3-hop RX-UE of FIG. 14 to perform a channel access procedure within the shared COT to transmit SL transmission to the COT initiating UE and/or the 1-hop RX-UE. To support the above-described operation, the COT sharing information may include a specific ID. The specific ID may be an ID that may identify a specific UE (e.g., the COT initiating UE, the 1-hop RX-UE, the 2-hop RX-UE). The specific ID may be a source ID and/or a destination ID of at least one of the COT initiating UE, the 1-hop RX-UE, or the 2-hop RX-UE.

In Embodiments 1 to 3, it may be allowed for a UE to perform a channel access procedure within the shared COT for transmission of a specific SL channel and/or a specific SL signal to a UE other than the COT initiating UE or the UE that transmitted the SL transmission in the previous hop. For example, the UE may perform a channel access procedure within the shared COT for transmission of all SL signals and/or all SL channels (e.g., S-SSB, PSCCH, PSSCH, PSFCH) to the COT initiating UE or the UE that transmitted the SL transmission in the previous hop. It may be allowed for a UE to perform a channel access procedure within the shared COT for transmission of only a PSFCH to a UE other than the COT initiating UE or the UE that transmitted the SL transmission in the previous hop. Variations, extensions, and/or combinations of Embodiments 1 to 3 may be applied.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-stage language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a first user equipment (UE), the method comprising:
receiving channel occupancy time (COT) sharing information from a second UE;
receiving first sidelink (SL) transmission from a third UE within a shared COT according to the COT sharing information;
determining whether second SL transmission is performed within the shared COT based on one or more conditions; and
performing the second SL transmission in the shared COT upon determining that the second SL transmission is performed.

2. The method of claim 1, wherein SL communication between the second UE and the third UE is 1-hop SL communication for the second UE, and SL communication between the first UE and the third UE is 2-hop SL communication for the second UE.

3. The method of claim 1, wherein in case that a reception target of the second SL transmission is the second UE, the second SL transmission is performed in the shared COT.

4. The method of claim 1, wherein in case that a reception target of the second SL transmission is the third UE, the second SL transmission is performed in the shared COT.

5. The method of claim 1, wherein in case that a reception target of the second SL transmission is a fourth UE and the second SL transmission is transmission of a specific SL channel, the second SL transmission is performed in the shared COT.

6. The method of claim 1, wherein the COT sharing information includes at least one of a source identifier (ID), a destination ID, a channel access priority class (CAPC), a remaining COT duration, frequency domain information of a resource block (RB) set(s) of a COT, an additional ID, or an associated cast type.

7. The method of claim 1, wherein the performing the second SL transmission comprises:
performing a type 2 SL channel access procedure in the shared COT; and
performing the second SL transmission in case that the type 2 SL channel access procedure is successful.

8. The method of claim 1, wherein the second SL transmission is performed in an accessible period configured after the first SL transmission and the accessible period belongs to the shared COT.

9. The method of claim 1, wherein the second UE is a COT initiating UE that initiates a COT, and the shared COT belongs to the COT initiated by the second UE.

10. A first user equipment (UE) comprising:
at least one processor,
wherein the at least one processor causes the first UE to:
receive channel occupancy time (COT) sharing information from a second UE;
receive first sidelink (SL) transmission for a third UE within a shared COT according to the COT sharing information;
determine whether second SL transmission is performed within the shared COT based on one or more conditions; and
perform the second SL transmission in the shared COT upon determining that the second SL transmission is performed.

11. The first UE of claim 10, wherein SL communication between the second UE and the third UE is 1-hop SL communication for the second UE, and SL communication between the first UE and the third UE is 2-hop SL communication for the second UE.

12. The first UE of claim 10, wherein in case that a reception target of the second SL transmission is the second UE, the second SL transmission is performed in the shared COT.

13. The first UE of claim 10, wherein in case that a reception target of the second SL transmission is the third UE, the second SL transmission is performed in the shared COT.

14. The first UE of claim 10, wherein in case that a reception target of the second SL transmission is a fourth UE and the second SL transmission is transmission of a specific SL channel, the second SL transmission is performed in the shared COT.

15. The first UE of claim 10, wherein the COT sharing information includes at least one of a source ID (identifier), a destination ID, a CAPC (channel access priority class), a remaining COT duration, frequency domain information of a resource block (RB) set(s) of a COT, an additional ID, or an associated cast type.

16. The first UE of claim 10, wherein, for performing the second SL transmission, the at least one processor causes the first UE to:
perform a type 2 SL channel access procedure in the shared COT; and
perform the second SL transmission in case that the type 2 SL channel access procedure is successful.

17. The first UE of claim 10, wherein the second SL transmission is performed in an accessible period configured after the first SL transmission and the accessible period belongs to the shared COT.

18. The first UE of claim 10, wherein the second UE is a COT initiating UE that initiates a COT, and the shared COT belongs to the COT initiated by the second UE.
